# EUROPÄISCHE PATENTANMELDUNG

(11) **EP 3 473 103 A1**
(43) Veröffentlichungstag der Anmeldung: **24.04.2019**
(21) Anmeldenummer: 17196900.9
(22) Anmeldetag: 17.10.2017
(51) Int. Cl.: A01P 13/02, A01N 43/80, A01N 43/56, A01N 43/40, A01N 43/82, A01N 25/04

(54) **WÄSSRIGE SUSPENSIONSKONZENTRATE AUF BASIS VON 2-[(2,4-DICHLORPHENYL)-METHYL]-4,4'-DIMETHYL-3-ISOXAZOLIDINON**

(71) Anmelder: Bayer AG, 51373 Leverkusen (DE)
(72) Erfinder: Die Erfindernennung liegt noch nicht vor
(74) Vertreter: BIP Patents

(57) **Zusammenfassung**

Die vorliegende Erfindung betrifft wässrige Suspensionskonzentrate auf Basis von 2-[(2,4-Dichlorphenyl)-methyl]-4,4'-dimethyl-3-isoxazolidinone, deren Herstellung sowie deren Mischungen mit Suspensionskonzentraten und deren Verwendung als agrochemische Formulierung mit geringer Flüchtigkeit und Schäden an Nachbarkulturen.

## Beschreibung

Die vorliegende Erfindung betrifft wässrige Suspensionskonzentrate auf Basis von 2-[(2,4-Dichlorphenyl)-methyl]-4,4'-dimethyl-3-isoxazolidinone, deren Herstellung sowie deren Mischungen mit Suspensionskonzentraten und deren Verwendung als agrochemische Formulierung mit reduzierter Flüchtigkeit und weniger Schäden an Nachbarkulturen ("non-target-plants").

Der Wirkstoff 2-[(2,4-Dichlorphenyl)-methyl]-4,4'-dimethyl-3-isoxazolidinone (CAS Nummer 81777-95-9 bzw. IPUAC 2-(2,4-dichlorobenzyl)-4,4-dimethyl-1,2-oxazolidin-3-one, im Folgenden abgekürzt DCPMI), ist ein chemischer Verwandter des Clomazone (im Folgenden abgekürzt CPMI, CAS 81777-89-1, IUPAC 2-(2-chlorobenzyl)-4,4-dimethyl-1,2-oxazolidin-3-one). Im Vergleich zu Clomazone hat DCPMI eine deutlich geringere Wasserlöslichkeit (39,5 ppm statt 1000 ppm) und einen etwas geringeren Dampfdruck (0,88 mPa statt 19,2 mPa), so dass die berechnete Henry Flüchtigkeits-Konstante (Verteilung des Wirkstoffes über die Wassergasphase) auf ähnlichem Niveau ist. Beide Wirkstoffe gehören zur Klasse der flüchtigen Wirkstoffe, die unerwünschte Schäden an Nachbarkulturen verursachen können. Verbunden mit dem hohen Dampfdruck kann es auch zu einer unerwünschten breiten Verteilung kommen, was aus human- und ökotoxikologischen sowie ökonomischen Gründen verhindert werden sollte.

DCPMI wird in herbiziden Zusammensetzungen und Mischungen eingesetzt oder als selektives Grasherbizid verwendet, wie beispielsweise in der WO-A 2015/127259 oder WO-A 2012/148689 beschrieben.

Kapselsuspensionen (CS) und Suspensionskonzentrate (SC) von DCPMI sind aus der PCT/EP 2017/0690701 sowie der WO 2015/127259 bekannt. Nachteilig an den aus diesem Stand der Technik bekannten Suspensionskonzentraten ist ihre Flüchtigkeit sowie die daraus resultierenden Schäden an Nachbar- und Kulturpflanzen.

Nachteilig an CS Formulierungen ist ferner, dass der Wirkstoff verkapselt werden muss. Ein Verkapselungsverfahren ist technisch aufwändiger und teurer als die Herstellung eines Suspensionskonzentrates. Darüber hinaus ist Nachteilig, dass die Verkapselung zu einer langsamen und oft verspäteten Freisetzung des Wirkstoffes führt, was die Wirkung beeinträchtigen kann, , so dass sich Unkräuter erholen oder Resistenzen bilden können. Damit das Herbizid dann dennoch seine Wirkung entfalten kann, muß es in höheren Konzentrationen eingesetzt werden, was wiederum ökologisch und ökonomisch nicht wünschenswert ist.

Bevorzugt wird DCPMI mit weiteren unverkapselten herbiziden Wirkstoffen kombiniert, welche ebenfalls als Suspensionskonzentrat vorliegen. Bei dieser Art der Anwendung ist eine schnelle Wirkung erwünscht, dabei einer zu spät einsetzenden Wirkung, die Unkräuter und Gräser schon zu weit im Wachstum fortgeschritten sein können, so dass eine erfolgreiche Bekämpfung nicht mehr möglich ist.

Die Aufgabe der vorliegenden Erfindung bestand daher in der Bereitstellung eines Suspensionskonzentrates von DCPMI, die die Flüchtigkeit des Wirkstoffs deutlich reduziert, vorzugsweise um mindestens 20% (relativ). Darüber hinaus soll eine bessere Wirkung als bei einer vergleichbaren Kapselsuspension erzielt werden, wobei Schäden an Nachbarkulturen sowie Kulturpflanzen im Vergleich zu den aus dem Stand der Technik bekannten Formulierungen vermindert oder im Idealfall vollständig vermieden werden.

Die Aufgabe wurde mit den erfindungsgemäßen Suspensionskonzentraten (SC) gelöst.
Gegenstand der vorliegenden Erfindung ist somit ein wäßriges Suspensionskonzentrat enthaltend
a) 2-[(2,4-dichlorphenyl)-methyl-4,4'-dimethyl]-3-isoxazolidinone,
b) mindestens ein Dispergiermittel,
c) Trägermaterial,
d) optional mindestens einen von a) verschiedenen agrochemischen Wirkstoff,
e) optional mindestens einen Safener,
f) optional mindestens einen Verdicker, und
g) optional weitere Zusatz und Hilfsstoffe.

Vorzugsweise enthält das erfindungsgemäße SC die Komponenten d und e), weiter bevorzugt die Komponenten d), e und f) als weitere essentielle Bestandteile.

In einer weiteren Ausführungsform enthält das erfindungsgemäße SC die Komponenten a) bis d) als essentielle Bestandteile, weiter bevorzugt die Komponenten a) -f) und besonders bevorzugt die Komponente a) bis g).

Vorzugsweise ist das Dispergiermittel b) ein Gemisch eines ionischen Dispergiermittels b2) und eines nicht-ionisches Dispergiermittel b1).

Die von a) verschiedenen agrochemische Wirkstoffe d) können ausgewählt sein aus der Gruppe der Herbizide, Insektizide, Fungizide und Nematozide, vorzugsweise ist d) ein weiteres Herbizid, bevorzugt ausgewählt aus der Gruppe, die Auxine, Inhibitoren der Pigment Synthese, DOXP Synthase Hemmer und VLCFA Hemmer umfaßt.
Gegenstand der vorliegenden Erfindung ist ferner ein Verfahren bei dem Komponente a) 2-[(2,4-dichlorphenyl)-methyl-4,4'-dimethyl]-3-isoxazolidinone in eine wässrige Lösung, enthaltend ein Dispergiermittel b, und ein Trägermaterial c) unter Rühren gegeben wird. Weiter bevorzugt enthält die wässrige Lösung ein ionisches und ein nicht-ionisches Dispergiermittel. Weiterhin können die Komponenten d) bis g) in den oben beschriebenen Kombinationen zugegeben werden.

Ebenfalls Gegenstand der vorliegenden Erfindung sind wasserdispergierbare Suspensionskonzentrate (SC) erhältlich nach dem erfindungsgemäßen Verfahren.

Die Herstellung des erfindungsgemäßen SC kann nach denen im Stand der Technik bekannten Verfahren erfolgen, z.B. durch Nassvermahlung der Komponenten in Perlmühlen (wie z.B. diskontinuierliche Perlmühlen, oder kontinuierliche Perlmühlen), oder Kolloidmühlen (wie z.B. Zahnkolloidmühlen).

Der Anteil an Wasser in den erfindungsgemäßen Formulierungen kann im Allgemeinen 25 bis 98 Gew.-%, bevorzugt 35 bis 85 Gew.-% betragen, wobei Wasser den Anteil der Komponenten a) - g) zu 100 Gew.-% ergänzt.

Dabei bezieht sich die Angabe "Gew.-%" (Gewichtsprozent) hier und in der gesamten Beschreibung, wenn nicht anders definiert, auf das relative Gewicht der jeweiligen Komponente bezogen auf das Gesamtgewicht des Konzentrats Formulierung.

Die Formulierung kann typischerweise Reste organischer Lösemitteln aus den Zusatzstoffen von 0 bis 5,0 Gew.-% enthalten, vorzugsweise von 0,1bis 2,5 Gew.-%.
Der Anteil an DCPMI (Komponente a) in den erfindungsgemäßen Formulierungen beträgt 0,5 bis 35 Gew.-%, bevorzugt 5 bis 30 Gew.-%, besonders bevorzugt 10 bis 30 Gew.-% und ganz besonders bevorzugt 15 bis 25 Gew.-%.

Sofern weitere Wirkstoffe d) im SC enthalten sind, beträgt der Gesamtanteil der Komponenten a) und d) 0,5 bis 35,0 Gew.-%, bevorzugt 5 bis 30 Gew.-%, besonders bevorzugt 10,0 bis 30,0 Gew.-% und ganz besonders bevorzugt 15,0 bis 25,0 Gew.-%, das heißt der Anteil der Komponente a) wird durch die Komponente d) verringert.

Der Anteil an Dispergiermittel (Komponente b) beträgt vorzugsweise 1,0 bis 15,0 Gew.-%, weiter bevorzugt 2,0 bis 10,0 Gew.-% und ganz besonders bevorzugt 2,5 bis 8,0 Gew.-%.

Bevorzugt wird eine Mischung aus b1) und b2 verwendet, wobei der Anteil des anionischen Dispergierhilfsmittel b1) in den erfindungsgemäßen Suspensionskonzentraten 0,1 bis 10 Gew.-%, bevorzugt 0,2 bis 7,0 Gew.-% und ganz besonders bevorzugt 0,3 bis 4,0 Gew.-%, beträgt, und der Anteil des nicht-ionischen Dispergierhilfsmittel b2) in den erfindungsgemäßen Suspensionskonzentraten 1,0 bis 15,0 Gew.-%, bevorzugt 2,0 bis 10,0 Gew.-% und ganz besonders bevorzugt 2,5 bis 8,0 Gew.-% beträgt, wobei der Gesamtanteil wie oben definiert in der Summe von b1) und b2) nicht überschritten wird.

In einer besonders bevorzugten Ausführungsform beträgt der Anteil an b1) 0,3 bis 1,5 Gew.-%, und der Anteil an b2) 2,5 bis 7,5 Gew.-%

Der Anteil an Trägermaterial (Komponente c) in den erfindungsgemäßen SCs beträgt vorzugsweise 0,1 bis 10,0 Gew.-% , weiter bevorzugt 0,3 bis 8,0 Gew.-% und ganz besonders bevorzugt 1,0 bis 7,0 Gew.-%.

Bevorzugt ist das Verhältnis von a) zu c) von 1 bis 10, weiter bevorzugt von 2 bis 8, besonders bevorzugt 3 - 6, und am meisten bevorzugt von 4.

Der Anteil an von a) verschiedenen agrochemischen Wirkstoffen (Komponente d) ist wie oben definiert. Der Anteil an Safener (Komponente e) beträgt vorzugsweise 1,0 bis15,0 Gew.-%, weiter bevorzugt 2,0 - bis 12,0 Gew.-%, und besonders bevorzugt 3,0 bis 8,0 Gew.-%.

Der Anteil der Verdicker f) in den erfindungsgemäßen SC's vorzugsweise von 0 bis 2,0 Gew.-%, bevorzugt 0,01 bis 1,00 Gew.-%, besonders bevorzugt 0,01 bis 0,60 Gew.-%, ganz besonders bevorzugt 0,04 bis 0,50 Gew.-% und ganz besonders bevorzugt 0,05 bis 0,3 Gew.-%.

Der Anteil der gegebenenfalls zugesetzten weiteren Hilfs- und Zusatzstoffe g) in den erfindungsgemäßen Dispersionen beträgt vorzugsweise 0 bis 20,0 Gew.-%, bevorzugt 1,0 bis 15,0 Gew.-%, weiter bevorzugt 3,0 bis 10,0 Gew.-%, und besonders bevorzugt 5,0 bis 10,0 Gew.-%.
Bei den oben genannten Anteilen der jeweiligen Inhaltsstoffe ist dem Fachmann klar, daß die Vorzugsbereiche der einzelnen Inhaltsstoffe frei miteinander kombiniert werden können, so daß auch diese Zusammensetzungen unterschiedlicher Vorzugsbereiche einzelner Inhaltsstoffe offenbart sein sollen.

Besonders bevorzugt sind jedoch, sofern nichts anderes offenbart, Vorzugsbereiche gleicher Ebene, also z.B. alle bevorzugten oder besonders bevorzugten Bereiche, wobei eine spezielle Offenbarung diese allgemeinen Kombinationen nicht ersetzen sondern ergänzen soll. Insbesondere bevorzugt ist eine Kombination der am stärksten bevorzugten (kleinsten) Vorzugsbereiche.

Dasselbe gilt für andere Angaben von Vorzugsbereichen an anderen Stellen der vorliegenden Beschreibung.

In einer bevorzugten Ausführungsform beträgt der Anteil der Komponente
a) 0,5 bis 35 Gew.-%
b) 1,0 bis 15 Gew.-%,
c) 0,1 bis 10 Gew.-%
d) 0%
e) 1-15 Gew.-%,
f) 0,01 bis 1,00 Gew.-%, und
g) 0 bis 20 Gew.-%,
wobei Wasser auf 100 Gew.% hinzuaddiert wird.

In einer weiter bevorzugten Ausführungsform beträgt der Anteil der Komponente
a) 0,5 bis 35 Gew.-%
b) 1,0 bis 15 Gew.-%,
c) 0,1 bis 10 Gew.-%
d) optional mindestens einen von a) verschiedenen agrochemischen Wirkstoff,
e) 1,0 bis 15,0 Gew.-%,
f) 0,01 bis 1,00 Gew.-%, und
g) 1 bis 15 Gew.-%,
wobei Wasser auf 100 Gew.% hinzuaddiert wird.

In einer weiteren bevorzugten Ausführungsform beträgt der Anteil der Komponente
a) 5 bis 30 Gew.-%,
b) 2,0 bis 10 Gew.-%,
c) 0,3 bis 8,0 Gew.-%
d) optional mindestens einen von a) verschiedenen agrochemischen Wirkstoff,
e) 2,0 bis 12,0 Gew.-%,
f) 0,01 bis 0,60 Gew.-%, und
g) 3,0 bis 10,0 Gew.-%,
wobei Wasser auf 100 Gew.% hinzuaddiert wird.

In einer weiteren bevorzugten Ausführungsform beträgt der Anteil der Komponente
a) 10 bis 30 Gew.-%
b) 2,50 bis 8,0 Gew.-%,
c) 1,0 bis 7,0 Gew.-%
d) optional mindestens einen von a) verschiedenen agrochemischen Wirkstoff,
e) 3,0 bis 8,0 Gew.-%,
f) 0,04 bis 0,50 Gew.-%, und
g) 5,0 bis 10,0 Gew.-%,
wobei Wasser auf 100 Gew.% hinzuaddiert wird.

In einer besonders bevorzugten Ausführungsform beträgt der Anteil der Komponente
a) 15 bis 25 Gew.-%
b) 2,5,0 bis 8,0 Gew.-%,
c) 1,0 bis 7,0 Gew.-%
d) optional mindestens einen von a) verschiedenen agrochemischen Wirkstoff,
e) 3,0 bis 8,0 Gew.-%,
f) 0,05 bis 0,30 Gew.-%, und
g) 5,0 bis 10,0 Gew.-%,
wobei Wasser auf 100 Gew.% hinzuaddiert wird.

Sofern in den oben genannten Ausführungsformen weitere Wirkstoffe d) im SC enthalten sind, beträgt der Gesamtanteil der Komponenten a) und d) 0,5 bis 35 Gew.-%, bevorzugt 5 bis 30 Gew.-%, besonders bevorzugt 10 bis 30 Gew.-% und ganz besonders bevorzugt 15,0 bis 25,0 Gew.-%, das heißt der Anteil der Komponente a) wird durch die Komponente d) verringert.

In den oben beschriebenen Ausführungsformen ist b) bevorzugt ferner eine Mischung aus b1) und b2, wobei der Anteil des anionischen Dispergierhilfsmittel b1) in den erfindungsgemäßen Suspensionskonzentraten 0,1 bis 10 Gew.-%, bevorzugt 0,2 bis 7 Gew.-% und ganz besonders bevorzugt 0,3 bis 4,0 Gew.-%, beträgt, und der Anteil des nicht-ionischen Dispergierhilfsmittel b2) in den erfindungsgemäßen Suspensionskonzentraten 1,0 bis 15,0 Gew.-%, bevorzugt 2,0 bis 10,0 Gew.-% und ganz besonders bevorzugt 2,5 bis 8,0 Gew.-% beträgt, wobei der Gesamtanteil wie oben definiert in der Summe von b1) und b2) nicht überschritten wird.

In einer besonders bevorzugten Ausführungsform beträgt der Anteil an b1) 0,3 bis 1,5 Gew.-%, und der Anteil an b2) 2,5 bis 7,5 Gew.-%

Geeignete anionische Dispergiermittel b1) wie Emulgatoren, Tenside, Netzmittel und Dispergatoren sind beispielweise Alkali-, Erdalkali- oder Ammoniumsalze von Sulfonaten, Sulfaten, Phosphaten, Carboxylaten und deren Mischungen wie z.B. die Salze der Alkylsulphonsäuren oder Alkylphosphorsäuren sowie Alkylarylsulphon- oder Alkylarylphosphorsäuren, Diphenylsulfonate, alpha-Olefinsulfonate, Ligninsulfonate, Sulfonate von Fettsäuren und Ölen, Sulfonate von ethoxylierten Alkylphenolen, Sulfonate von alkoxylierten Arylphenolen, Sulfonate von kondensierten Naphthalinen, Sulfonate von Dodecyl- und Tridecylbenzolen, Sulfonate von Naphthalinen und Alkylnaphthalinen, Sulfosuccinate oder Sulfosuccinamate. Beispiele für Sulfate sind Sulfate von Fettsäuren und Ölen, von ethoxylierten Alkylphenolen, von Alkoholen, von ethoxylierten Alkoholen oder von Fettsäureestern. Beispiele für Phosphate sind Phosphatester. Beispiele fur Carboxylate sind Alkylcarboxylate sowie carboxylierte Alkohol- oder Alkylphenolethoxylate. Ebenfalls geeignet ist die Gruppe der anionischen Emulgatoren der Alkalimetall-, Erdalkalimetall- und Ammoniumsalze der Polystyrolsulfonsäuren, Salze der Polyvinylsulphonsäuren, Salze der Alkylnaphthalinsulphonsäuren, Salze von Alkylnaphthalinsulphonsäure-Formaldehyd Kondensationsprodukte, Salze von Kondensationsprodukte der Naphthalinsulphonsäure, Phenolsulphonsäure und Formaldehyd. Beispiele sind Kalziumdodecylbenzensulfonat wie Rhodocal® 70/B (Solvay), Phenylsulfonat CA100 (Clariant) oder Isopropylammoniumdodecylbenzenesulfonate wie Atlox® 3300B (Croda).

Weitere typische Vertreter sind unter anderem Phenylsulfonat CA (Ca-Dodecylbenzolsulfonat), Soprophor®-Typen (gegebenenfalls veresterte Derivate von Tristyrylphenoi-Ethoxylaten), Emmulsogen® 3510 (alkyliertes EO/PO Copolymerisat), Emulsogen® EL 400 (ethoxyliertes Ricinusöl), Tween®-Typen (fettacylierte Sorbitan-Ethoxylate), Calsogen® AR 100 (Ca-Dodecylbenzolsulfonat). Bevorzugt sind Kombinationen aus Salzen alkylierter aromatischer Sulfonsäuren, wie Phenylsulfonat Ca und/oder Calsogen® AR 100, mit alkylierten Copolymerisaten aus Ethylen- und Propylenoxid, wie Emulsogen® 3510. Besonders bevorzugt sind Kombinationen aus Salzen der Dodecylbenzolsulfonsäure, wie Calsogen® AR 1 00 mit alkyliertem Copolymerisat aus Ethylen- und Propylenoxid, wie Emulsogen® 3510.

Beispiele für weitere anionische Emulgatoren b1) aus der Gruppe der Naphthalinsulfonate sind Galoryl® MT 800 (Natrium-Dibutylnaphthalinsulfonsäure), Morwet® IP (Natriumdiisopropylnaphthalinsulfonat) und Nekal® BX (Alkylnaphthalinsulfonat). Beispiele für anionische Tenside aus der Gruppe der Kondensationsprodukte von Naphthalinsulfonaten mit Formaldehyd sind Galoryl® DT 201 (Naphthalinsulfonsäure Hydroxypolymer mit Formaldeyd und Methylphenol Natriumsalz), Galoryl® DT 250 (Kondensationsprodukt aus Phenol- und Naphthalinsulfonaten), Reserve® C (Kondensationsprodukt aus Phenol- und Naphthalinsulfonaten) oder Morwet® D-425, Tersperse® 2020. Bevorzugt sind 1,2 mit Di-Butyl- oder Di-Isobutyl-substituierte Naphthalinsulfonate, wie z.B. Produkte wie Galoryl® MT 800 (CFPI-Nufarm) und Nekal® BX (BASF). Weitere typische Tenside sind Soprophor® 3D33, Soprophor® 4D384, Soprophor® BSU, Soprophor® CY/8 (Solvay) und Hoe® S3474 und in Form der Sapogenat® T-Produkte (Clariant), beispielsweise Sapogenat® T 100. Weitere typische Vertreter sind auf Basis von Lignin (wie Ligninsulfonate, Borresperse®NA, REAX® 88 oder Kraftsperse 25 S).

Von den oben genannten anionischen Dispergierhilfsmitteln b1) werden vorzugsweise verschiedenen Sulfonate verwendet, besonders bevorzugt solche auf Naphthalinbasis.
Als nichtionische Dispergiermittel b2) wie Emulgatoren, Netzmittel, Tenside und Dispergatoren kommen übliche, in Formulierungen von agrochemischen Wirkstoffen vorhandene oberflächenative Substanzen in Frage. Beispielhaft genannt seien ethoxylierte Nonylphenole, Umsetzungsprodukte von linearen oder verzweigten Alkoholen mit Ethylenoxid und/oder Propylenoxid, Ethylenoxid-Propylenoxid-Blockcopolymere, Endgruppen-verschlossene und nicht Endgruppen-verschlossene alkoxylierte lineare und verzweigte, gesättigte und ungesättigte Alkohole (z.B. Butoxypolyethylenpropylenglycole), Umsetzungsprodukte von Alkylphenolen mit Ethylenoxid und/oder Propylenoxid, Ethylenoxid-Propylenoxid-Blockcopolymere, Polyethylenglykole und Polypropylenglykole, weiterhin Fettsäureester, Fettsäurepolyglykoletherester, Alkylsulfonate, Alkylsulfate, Arylsulfate, ethoxylierte Arylalkylphenole, wie zum Beispiel Tristyryl-phenol-ethoxylat mit durchschnittlich 16 Ethylenoxid-Einheiten pro Molekül, weiterhin ethoxylierte und propoxylierte Arylalkylphenole sowie sulfatierte oder phosphatierte Arylalkylphenol-ethoxylate bzw. -ethoxy- und -propoxylate. Besonders bevorzugt sind Tristryl-phenolalkoxylate und Fettsäurepolyglykoletherester. Ganz besonders bevorzugt sind Tristyryl-phenol-ethoxylate, Tristyryl-phenol-ethoxy-propoxylate und Ricinusölpolyglykoletherestern, jeweils einzeln oder in Mischungen. Hinzu kommen gegebenenfalls Additive, wie Tenside oder Ester von Fettsäuren, die zur Verbesserung der biologischen Wirksamkeit beitragen. Geeignete nichtionische Emulgatoren b2) sind beispielsweise Soprophor® 796/P, Lucramul® CO30, Lucramul® HOT, Lucramul® PSI 100 oder Synperonic® T304.

Geeignete nicht-ionische Dispergatoren b2) können ebenfalls ausgewählt werden aus der Gruppe enthaltend Polyvinylpyrrolidon (PVP), Polyvinylalkohol, Co-Polymer aus PVP und Dimethylaminoethylmethacrylat, butyliertes PVP, Co-Polymer aus Vinylchlorid und Vinylacetat, und partiell hydrolysiertem Vinylacetat, Phenolharze, modifizierte Cellulose Typen wie beispielsweise Luviskol® (Polyvinylpyrrolidon), Mowiol® (Polyvinylalkohol) oder modifizierte Cellulose. Bevorzugt sind Polyvinylpyrrolidon-Typen, besonders bevorzugt sind Typen von niedrigem Molekulargewicht wie Luviskol® K30 oder Sokalan® K30.

Als weitere nicht-ionische Emulgatoren b2), die vorzugsweise verwendet werden, aus der Gruppe der Di-und Tri-block-copolymere aus Alkylenoxiden kommen z.B. Verbindungen in Frage, die auf Basis von Ethylen- und Propylenoxid aufgebaut sind, mit mittleren Molmassen zwischen 200 und 10000, bevorzugt 1000 bis 4000 g/mol, wobei der Massenanteil des polyethoxylierte Blocks zwischen 10 und 80% variiert, wie z.B. Synperonic® PE-Reihe (Uniqema), Pluronic® PE-Reihe (BASF), VOP® 32- oder Genapol® PF-Reihe (Clariant).

Die Trägermaterialien c) sind vorzugsweise ausgewählt aus der Gruppe enthaltend Mineralien, Carbonate, Sulfate und Phosphate von Erdalkali- und Erdmetallen, wie Calciumcarbonat, polymere Kohlenhydrate, Kieselsäuren, (natürliche) Gerüstsilikate, wie Kaolin. Typische Vertreter geeigneter Füllstoffe c) sind beispielsweise Agsorb® LVM®-GA (Attapulgit), Harborlite® 300 (Perlit), Collys® HV (modifizierte Stärke), Omya®-Kreide (Calciumcarbonat), Kaolin® Tec 1 (Kaolin, Aluminiumhydrosilicat), Steamic® OOS (Talk, Magnesiumsilicat).

Weiter bevorzugt für c) sind hier natürliche Gerüstsilikate und Calciumcarbonat-Typen wie Omya®-Kreide (Calciumcarbonat), Kaolin Tec 1® (Kaolin) und Harborlite® 300 (Perlit), besonders bevorzugt natürliche Gerüstsilikate wie Kaolin®, Tec® 1 (Kaolin, Aluminiumhydrosilicat) und Harborlite® 300 (Perlit). Weitere Füllstoffe in den erfindungsgemäßen SC Formulierungen sind ausgewählt aus der Gruppe enthaltend Mineralien, Carbonate, Sulfate und Phosphate von Erdalkali- und Erdmetallen, wie Calciumcarbonat, polymere Kohlenhydrate, Gerüstsilikate, wie Fällungskieselsäuren mit geringer Saugfähigkeit und natürliche Gerüstsilikate, wie Kaolin. Typische Vertreter geeigneter Füllstoffe c) sind beispielsweise Agsorb® LVM®-GA (Attapulgit), Harborlite® 300 (Perlit), Collys® HV (modifizierte Stärke), Omya®-Kreide (Calciumcarbonat), Kaolin® Tec 1 (Kaolin, Aluminiumhydrosilicat), Steamic® OOS (Talk, Magnesiumsilicat). Geeignet sind beispielsweise modifizierte natürliche Silikate, wie chemisch modifizierte Bentonite, Hectorite, Attapulgite, Montmorillonite, Smektite oder andere Silikatmineralien, wie Bentone® (Elementis), Attagel® (Engelhard), Agsorb® (Oil-Dri Corporation) oder Hectorite® (Akzo Nobel) oder der Van Gel-Reihe (R.T. Vanderbilt).

Besonders bevorzugt sind Trägermaterialien c) ausgewählt aus der Gruppe der hochsaugfähigen Träger mit einer Aufnahmefähigkeit von wenigstens 200 g Dibutylphthalat pro 100 g Trägermaterial (BET Oberfläche nach ISO 9277). wie beispielsweise synthetische Fällungskieselsäure von hoher Saugfähigkeit (Sipernat®-Typen) sowie pyrogene Kieselsäure (Aerosil® Typen).

Von Komponente a) verschiedene agrochemische Wirkstoffe (Komponente d) sind Herbizide, Fungizide, Insektizide, Pflanzenwachstums-regulatoren, und dergleichen.

Fungizide Wirkstoffe sind z.B.
1) Inhibitoren der Ergosterol-Biosynthese, beispielsweise (1.001) Cyproconazol, (1.002) Difenoconazol, (1.003) Epoxiconazol, (1.004) Fenhexamid, (1.005) Fenpropidin, (1.006) Fenpropimorph, (1.007) Fenpyrazamin, (1.008) Fluquinconazol, (1.009) Flutriafol, (1.010) Imazalil, (1.011) Imazalil Sulfat, (1.012) Ipconazol, (1.013) Metconazol, (1.014) Myclobutanil, (1.015) Paclobutrazol, (1.016) Prochloraz, (1.017) Propiconazol, (1.018) Prothioconazol, (1.019) Pyrisoxazol, (1.020) Spiroxamin, (1.021) Tebuconazol, (1.022) Tetraconazol, (1.023) Triadimenol, (1.024) Tridemorph, (1.025) Triticonazol, (1.026) (1R,2S,5S)-5-(4-Chlorbenzyl)-2-(chlormethyl)-2-methyl-1-(1H-1,2,4-triazol-1-ylmethyl)cyclopentanol, (1.027) (1S,2R,5R)-5-(4-Chlorbenzyl)-2-(chlormethyl)-2-methyl-1-(1H-1,2,4-triazol-1-ylmethyl)cyclopentanol, (1.028) (2R)-2-(1-Chlorcyclopropyl)-4-[(1R)-2,2-dichlorcyclopropyl]-1-(1H-1,2,4-triazol-1-yl)butan-2-ol (1.029) (2R)-2-(1-Chlorcyclopropyl)-4-[(1S)-2,2-dichlorcyclopropyl]-1-(1H-1,2,4-triazol-1-yl)butan-2-ol, (1.030) (2R)-2-[4-(4-Chlorphenoxy)-2-(trifluormethyl)phenyl]-1-(1H-1,2,4-triazol-1-yl)propan-2-ol, (1.031) (2S)-2-(1-Chlorcyclopropyl)-4-[(1R)-2,2-dichlorcyclopropyl]-1-(1H-1,2,4-triazol-1-yl)butan-2-ol, (1.032) (2S)-2-(1-Chlorcyclopropyl)-4-[(1S)-2,2-dichlorcyclopropyl]-1-(1H-1,2,4-triazol-1-yl)butan-2-ol, (1.033) (2S)-2-[4-(4-Chlorphenoxy)-2-(trifluormethyl)phenyl]-1-(1H-1,2,4-triazol-1-yl)propan-2-ol, (1.034) (R)-[3-(4-Chlor-2-fluorphenyl)-5-(2,4-difluorphenyl)-1,2-oxazol-4-yl](pyridin-3-yl)methanol, (1.035) (S)-[3-(4-Chlor-2-fluorphenyl)-5-(2,4-difluorphenyl)-1,2-oxazol-4-yl](pyridin-3-yl)methanol, (1.036) [3-(4-Chlor-2-fluorphenyl)-5-(2,4-difluorphenyl)-1,2-oxazol-4-yl](pyridin-3-yl)methanol, (1.037) 1-({(2R,4S)-2-[2-Chlor-4-(4-chlorphenoxy)phenyl]-4-methyl-1,3-dioxolan-2-yl}methyl)-1H-1,2,4-triazol, (1.038) 1-({(2S,4S)-2-[2-Chlor-4-(4-chlorphenoxy)phenyl]-4-methyl-1,3-dioxolan-2-yl}methyl)-1H-1,2,4-triazol, (1.039) 1-{[3-(2-Chlorphenyl)-2-(2,4-difluorphenyl)oxiran-2-yl]methyl}-1H-1,2,4-triazol-5-yl-thiocyanat, (1.040) 1-{[rel(2R,3R)-3-(2-Chlorphenyl)-2-(2,4-difluorphenyl)oxiran-2-yl]methyl}-1H-1,2,4-triazol-5-yl-thiocyanat, (1.041) 1-{[rel(2R,3S)-3-(2-Chlorphenyl)-2-(2,4-difluorphenyl)oxiran-2-yl]methyl}-1H-1,2,4-triazol-5-yl-thiocyanat, (1.042) 2-[(2R,4R,5R)-1-(2,4-Dichlorphenyl)-5-hydroxy-2,6,6-trimethylheptan-4-yl]-2,4-dihydro-3H-1,2,4-triazol-3-thion, (1.043) 2-[(2R,4R,5S)-1-(2,4-Dichlorphenyl)-5-hydroxy-2,6,6-trimethylheptan-4-yl]-2,4-dihydro-3H-1,2,4-triazol-3-thion, (1.044) 2-[(2R,4S,5R)-1-(2,4-Dichlorophenyl)-5-hydroxy-2,6,6-trimethylheptan-4-yl]-2,4-dihydro-3H-1,2,4-triazol-3-thion, (1.045) 2-[(2R,4S,5S)-1-(2,4-Dichlorphenyl)-5-hydroxy-2,6,6-trimethylheptan-4-yl]-2,4-dihydro-3H-1,2,4-triazol-3-thion, (1.046) 2-[(2S,4R,5R)-1-(2,4-Dichlorphenyl)-5-hydroxy-2,6,6-trimethylheptan-4-yl]-2,4-dihydro-3H-1,2,4-triazol-3-thion, (1.047) 2-[(2S,4R,5S)-1-(2,4-Dichlorphenyl)-5-hydroxy-2,6,6-trimethylheptan-4-yl]-2,4-dihydro-3H-1,2,4-triazol-3-thion, (1.048) 2-[(2S,4S,5R)-1-(2,4-Dichlorphenyl)-5-hydroxy-2,6,6-trimethylheptan-4-yl]-2,4-dihydro-3H-1,2,4-triazol-3-thion, (1.049) 2-[(2S,4S,5S)-1-(2,4-Dichlorphenyl)-5-hydroxy-2,6,6-trimethylheptan-4-yl]-2,4-dihydro-3H-1,2,4-triazol-3-thion, (1.050) 2-[1-(2,4-Dichlorphenyl)-5-hydroxy-2,6,6-trimethylheptan-4-yl]-2,4-dihydro-3H-1,2,4-triazol-3-thion, (1.051) 2-[2-Chlor-4-(2,4-dichlorophenoxy)phenyl]-1-(1H-1,2,4-triazol-1-yl)propan-2-ol, (1.052) 2-[2-Chlor-4-(4-chlorphenoxy)phenyl]-1-(1H-1,2,4-triazol-1-yl)butan-2-ol, (1.053) 2-[4-(4-Chlorphenoxy)-2-(trifluormethyl)phenyl]-1-(1H-1,2,4-triazol-1-yl)butan-2-ol, (1.054) 2-[4-(4-Chlorphenoxy)-2-(trifluormethyl)phenyl]-1-(1H-1,2,4-triazol-1-yl)pentan-2-ol, (1.055) 2-[4-(4-Chlorphenoxy)-2-(trifluormethyl)phenyl]-1-(1H-1,2,4-triazol-1-yl)propan-2-ol, (1.056) 2- {[3-(2-Chlorphenyl)-2-(2,4-difluorphenyl)oxiran-2-yl]methyl} -2,4-dihydro-3H-1,2,4-triazol-3-thion, (1.057) 2-{[rel(2R,3R)-3-(2-Chlorphenyl)-2-(2,4-difluorphenyl)oxiran-2-yl]methyl}-2,4-dihydro-3H-1,2,4-triazol-3-thion, (1.058) 2-{[rel(2R,3S)-3-(2-Chlorphenyl)-2-(2,4-difluorphenyl)oxiran-2-yl]methyl}-2,4-dihydro-3H-1,2,4-triazol-3-thion, (1.059) 5-(4-Chlorbenzyl)-2-(chlormethyl)-2-methyl-1-(1H-1,2,4-triazol-1-ylmethyl)cyclopentanol, (1.060) 5-(Allylsulfanyl)-1-{[3-(2-chlorphenyl)-2-(2,4-difluorphenyl)oxiran-2-yl]methyl}-1H-1,2,4-triazol, (1.061) 5-(Allylsulfanyl)-1-{[rel(2R,3R)-3-(2-chlorphenyl)-2-(2,4-difluorphenyl)oxiran-2-yl]methyl}-1H-1,2,4-triazol, (1.062) 5-(Allylsulfanyl)-1-{[rel(2R,3S)-3-(2-chlorphenyl)-2-(2,4-difluorphenyl)oxiran-2-yl]methyl}-1H-1,2,4-triazol, (1.063) N'-(2,5-Dimethyl-4-{[3-(1,1,2,2-tetrafluorethoxy)phenyl]sulfanyl}phenyl)-N-ethyl-N-methylimidoformamid, (1.064) N'-(2,5-Dimethyl-4-{[3-(2,2,2-trifluorethoxy)phenyl]sulfanyl}phenyl)-N-ethyl-N-methylimidoformamid, (1.065) N'-(2,5-Dimethyl-4-{[3-(2,2,3,3-tetrafluorpropoxy)phenyl]sulfanyl}phenyl)-N-ethyl-N-methylimidoformamid, (1.066) N'-(2,5-Dimethyl-4-{[3-(pentafluorethoxy)phenyl]sulfanyl}phenyl)-N-ethyl-N-methylimidoformamid, (1.067) N'-(2,5-Dimethyl-4-{3-[(1,1,2,2-tetrafluorethyl)sulfanyl]phenoxy}phenyl)-N-ethyl-N-methylimidoformamid, (1.068) N'-(2,5-Dimethyl-4- {3-[(2,2,2-trifluorethyl)sulfanyl]phenoxy}phenyl)-N-ethyl-N-methylimidoformamid, (1.069) N'-(2,5-Dimethyl-4-{3-[(2,2,3,3-tetrafluorpropyl)sulfanyl]phenoxy}phenyl)-N-ethyl-N-methylimidoformamid, (1.070) N'-(2,5-Dimethyl-4-{3-[(pentafluorethyl)sulfanyl]phenoxy}phenyl)-N-ethyl-N-methylimidoformamid, (1.071)N'-(2,5-Dimethyl-4-phenoxyphenyl)-N-ethyl-N-methylimidoformamid, (1.072) N'-(4-{[3-(Difluormethoxy)phenyl]sulfanyl}-2,5-dimethylphenyl)-N-ethyl-N-methylimidoformamid, (1.073) N'-(4-{3-[(Difluormethyl)sulfanyl]phenoxy}-2,5-dimethylphenyl)-N-ethyl-N-methylimidoformamid, (1.074) N'-[5-Brom-6-(2,3-dihydro-1H-inden-2-yloxy)-2-methylpyridin-3-yl]-N-ethyl-N-methylimidoformamid, (1.075) N'-{4-[(4,5-Dichlor-1,3-thiazol-2-yl)oxy]-2,5-dimethylphenyl}-N-ethyl-N-methylimidoformamid, (1.076) N'-{5-Brom-6-[(1R)-1-(3,5-difluorophenyl)ethoxy]-2-methylpyridin-3-yl}-N-ethyl-N-methylimidoformamid, (1.077) N'-{5-Brom-6-[(1S)-1-(3,5-difluorphenyl)ethoxy]-2-methylpyridin-3-yl}-N-ethyl-N-methylimidoformamid, (1.078) N'-{5-Brom-6-[(cis-4-isopropylcyclohexyl)oxy]-2-methylpyridin-3-yl}-N-ethyl-N-methylimidoformamid, (1.079) N'-{5-Brom-6-[(trans-4-isopropylcyclohexyl)oxy]-2-methylpyridin-3-yl}-N-ethyl-N-methylimidoformamid, (1.080) N'-{5-Bromo-6-[-(3,5-difluorphenyl)ethoxy]-2-methylpyridin-3-yl}-N-ethyl-N-methylimidoformamid, (1.081) Mefentrifluconazole, (1.082) Ipfentrifluconazole.
2) Inhibitoren der Atmungskette am Komplex I oder II beispielsweise (2.001) Benzovindiflupyr, (2.002) Bixafen, (2.003) Boscalid, (2.004) Carboxin, (2.005) Fluopyram, (2.006) Flutolanil, (2.007) Fluxapyroxad, (2.008) Furametpyr, (2.009) Isofetamid, (2.010) Isopyrazam (anti-epimeres Enantiomer 1R,4S,9S), (2.011) Isopyrazam (anti-epimeres Enantiomer 1S,4R,9R), (2.012) Isopyrazam (anti-epimeres Racemat 1RS,4SR,9SR), (2.013) Isopyrazam (Mischung des syn-epimeren Razemates 1RS,4SR,9RS und des antiepimeren Razemates 1RS,4SR,9SR), (2.014) Isopyrazam (syn-epimeres Enantiomer 1R,4S,9R), (2.015) Isopyrazam (syn-epimeres Enantiomer 1S,4R,9S), (2.016) Isopyrazam (syn-epimeres Racemat 1RS,4SR,9RS), (2.017) Penflufen, (2.018) Penthiopyrad, (2.019) Pydiflumetofen, (2.020) Pyraziflumid, (2.021) Sedaxane, (2.022) 1,3-Dimethyl-N-(1,1,3-trimethyl-2,3-dihydro-1H-inden-4-yl)-1H-pyrazol-4-carboxamid, (2.023) 1,3-Dimethyl-N-[(3R)-1,1,3-trimethyl-2,3-dihydro-1H-inden-4-yl]-1H-pyrazol-4-carboxamid, (2.024) 1,3-Dimethyl-N-[(3S)-1,1,3-trimethyl-2,3-dihydro-1H-inden-4-yl]-1H-pyrazol-4-carboxamid, (2.025) 1-Methyl-3-(trifluormethyl)-N-[2'-(trifluormethyl)biphenyl-2-yl]-1H-pyrazol-4-carboxamid, (2.026) 2-Fluor-6-(trifluoromethyl)-N-(1,1,3-trimethyl-2,3-dihydro-1H-inden-4-yl)benzamid, (2.027) 3-(Difluormethyl)-1-methyl-N-(1,1,3-trimethyl-2,3-dihydro-1H-inden-4-yl)-1H-pyrazol-4-carboxamid, (2.028) 3-(Difluormethyl)-1-methyl-N-[(3R)-1,1,3-trimethyl-2,3-dihydro-1H-inden-4-yl]-1H-pyrazol-4-carboxamid, (2.029) 3-(Difluormethyl)-1-methyl-N-[(3S)-1,1,3-trimethyl-2,3-dihydro-1H-inden-4-yl]-1H-pyrazol-4-carboxamid, (2.030) 3-(Difluormethyl)-N-(7-fluor-1,1,3-trimethyl-2,3-dihydro-1H-inden-4-yl)-1-methyl-1H-pyrazol-4-carboxamid, (2.031) 3-(Difluormethyl)-N-[(3R)-7-fluor-1,1,3-trimethyl-2,3-dihydro-1H-inden-4-yl]-1-methyl-1H-pyrazol-4-carboxamid, (2.032) 3-(Difluoromethyl)-N-[(3S)-7-fluor-1,1,3-trimethyl-2,3-dihydro-1H-inden-4-yl]-1-methyl-1H-pyrazol-4-carboxamid, (2.033) 5,8-Difluor-N-[2-(2-fluor-4-{[4-(trifluormethyl)pyridin-2-yl]oxy}phenyl)ethyl]quinazolin-4-amin, (2.034) N-(2-Cyclopentyl-5-fluorbenzyl)-N-cyclopropyl-3-(difluormethyl)-5-fluor-1-methyl-1H-pyrazol-4-carboxamid, (2.035) N-(2-tert-Butyl-5-methylbenzyl)-N-cyclopropyl-3-(difluormethyl)-5-fluor-1-methyl-1H-pyrazol-4-carboxamid, (2.036) N-(2-tert-Butylbenzyl)-N-cyclopropyl-3-(difluormethyl)-5-fluor-1-methyl-1H-pyrazol-4-carboxamid, (2.037) N-(5-Chlor-2-ethylbenzyl)-N-cyclopropyl-3-(difluormethyl)-5-fluor-1-methyl-1H-pyrazol-4-carboxamid, (2.038) N-(5-Chlor-2-isopropylbenzyl)-N-cyclopropyl-3-(difluormethyl)-5-fluor-1-methyl-1H-pyrazol-4-carboxamid, (2.039) N-[(1R,4S)-9-(Dichlormethylen)-1,2,3,4-tetrahydro-1,4-methanonaphthalen-5-yl]-3-(difluormethyl)-1-methyl-1H-pyrazol-4-carboxamid, (2.040) N-[(1S,4R)-9-(Dichlormethylen)-1,2,3,4-tetrahydro-1,4-methanonaphthalen-5-yl]-3-(difluormethyl)-1-methyl-1H-pyrazol-4-carboxamid, (2.041) N-[1-(2,4-Dichlorphenyl)-1-methoxypropan-2-yl]-3-(difluormethyl)-1-methyl-1H-pyrazol-4-carboxamid, (2.042) N-[2-Chlor-6-(trifluormethyl)benzyl]-N-cyclopropyl-3-(difluormethyl)-5-fluor-1-methyl-1H-pyrazol-4-carboxamid, (2.043) N-[3-Chlor-2-fluor-6-(trifluormethyl)benzyl]-N-cyclopropyl-3-(difluormethyl)-5-fluor-1-methyl-1H-pyrazol-4-carboxamid, (2.044) N-[5-Chlor-2-(trifluormethyl)benzyl]-N-cyclopropyl-3-(difluormethyl)-5-fluor-1-methyl-1H-pyrazol-4-carboxamid, (2.045) N-Cyclopropyl-3-(difluormethyl)-5-fluor-1-methyl-N-[5-methyl-2-(trifluormethyl)benzyl]-1-H-pyrazol-4-carboxamid, (2.046) N-Cyclopropyl-3-(difluormethyl)-5-fluor-N-(2-fluor-6-isopropylbenzyl)-1-methyl-1H-pyrazol-4-carboxamid, (2.047) N-Cyclopropyl-3-(difluormethyl)-5-fluor-N-(2-isopropyl-5-methylbenzyl)-1-methyl-1H-pyrazol-4-carboxamid, (2.048) N-Cyclopropyl-3-(difluormethyl)-5-fluor-N-(2-isopropylbenzyl)-1-methyl-1H-pyrazol-4-carbothioamid, (2.049) N-Cyclopropyl-3-(difluoromethyl)-5-fluor-N-(2-isopropylbenzyl)-1-methyl-1H-pyrazol-4-carboxamid, (2.050) N-Cyclopropyl-3-(difluormethyl)-5-fluor-N-(5-fluor-2-isopropylbenzyl)-1-methyl-1H-pyrazol-4-carboxamid, (2.051) N-Cyclopropyl-3-(difluormethyl)-N-(2-ethyl-4,5-dimethylbenzyl)-5-fluor-1-methyl-1H-pyrazol-4-carboxamid, (2.052) N-Cyclopropyl-3-(difluormethyl)-N-(2-ethyl-5-fluorbenzyl)-5-fluor-1-methyl-1H-pyrazol-4-carboxamid, (2.053) N-Cyclopropyl-3-(difluormethyl)-N-(2-ethyl-5-methylbenzyl)-5-fluor-1-methyl-1H-pyrazole-4-carboxamid, (2.054) N-Cyclopropyl-N-(2-cyclopropyl-5-fluorbenzyl)-3-(difluormethyl)-5-fluor-1-methyl-1H-pyrazole-4-carboxamid, (2.055) N-Cyclopropyl-N-(2-cyclopropyl-5-methylbenzyl)-3-(difluormethyl)-5-fluor-1-methyl-1H-pyrazole-4-carboxamid, (2.056) N-Cyclopropyl-N-(2-cyclopropylbenzyl)-3-(difluormethyl)-5-fluor-1-methyl-1H-pyrazole-4-carboxamid.
3) Inhibitoren der Atmungskette am Komplex III, beispielsweise (3.001) Ametoctradin, (3.002) Amisulbrom, (3.003) Azoxystrobin, (3.004) Coumethoxystrobin, (3.005) Coumoxystrobin, (3.006) Cyazofamid, (3.007) Dimoxystrobin, (3.008) Enoxastrobin, (3.009) Famoxadon, (3.010) Fenamidon, (3.011) Flufenoxystrobin, (3.012) Fluoxastrobin, (3.013) Kresoxim-Methyl, (3.014) Metominostrobin, (3.015) Orysastrobin, (3.016) Picoxystrobin, (3.017) Pyraclostrobin, (3.018) Pyrametostrobin, (3.019) Pyraoxystrobin, (3.020) Trifloxystrobin (3.021) (2E)-2-{2-[({[(1E)-1-(3-{[(E)-1-Fluor-2-phenylvinyl] oxy} phenyl)ethyliden] amino} oxy)methyl]phenyl}-2-(methoxyimino)-N-methylacetamid, (3.022) (2E,3Z)-5-{[1-(4-Chlorphenyl)-1H-pyrazol-3-yl]oxyl}-2-(methoxyimino)-N,3-dimethylpent-3-enamid, (3.023) (2R)-2-{2-[(2,5-Dimethylphenoxy)methyl]phenyl}-2-methoxy-N-methylacetamid, (3.024) (2S)-2-{2-[(2,5-Dimethylphenoxy)methyl]phenyl}-2-methoxy-N-methylacetamid, (3.025) (3S,6S,7R,8R)-8-Benzyl-3-[({3-[(isobutyryloxy)methoxy]-4-methoxypyridin-2-yl}carbonyl)amino]-6-methyl-4,9-dioxo-1,5-dioxonan-7-yl-2-methylpropanoat, (3.026) 2-{2-[(2,5-Dimethylphenoxy)methyl]phenyl}-2-methoxy-N-methylacetamid, (3.027) N-(3-Ethyl-3,5,5-trimethylcyclohexyl)-3-formamido-2-hydroxybenzamid, (3.028) (2E,3Z)-5-{[1-(4-Chlor-2-fluorphenyl)-1H-pyrazol-3-yl]oxy}-2-(methoxyimino)-N,3-dimethylpent-3-enamid, (3.029) Methyl {5-[3-(2,4-dimethylphenyl)-1H-pyrazol-1-yl]-2-methylbenzyl}carbamate.
4) Inhibitoren der Mitose und Zellteilung, beispielsweise (4.001) Carbendazim, (4.002) Diethofencarb, (4.003) Ethaboxam, (4.004) Fluopicolid, (4.005) Pencycuron, (4.006) Thiabendazol, (4.007) Thiophanat-Methyl, (4.008) Zoxamid, , (4.009) 3-Chlor-4-(2,6-difluorphenyl)-6-methyl-5-phenylpyridazin, (4.010) 3-Chlor-5-(4-chlorphenyl)-4-(2,6-difluorphenyl)-6-methylpyridazin, (4.011) 3-Chlor-5-(6-chlorpyridin-3-yl)-6-methyl-4-(2,4,6-trifluorphenyl)pyridazin, (4.012) 4-(2-Brom-4-fluorphenyl)-N-(2,6-difluorphenyl)-1,3-dimethyl-1H-pyrazol-5-amin, (4.013) 4-(2-Brom-4-fluorphenyl)-N-(2-brom-6-fluorphenyl)-1,3-dimethyl-1H-pyrazol-5-amin, (4.014) 4-(2-Brom-4-fluorphenyl)-N-(2-bromphenyl)-1,3-dimethyl-1H-pyrazol-5-amin, (4.015) 4-(2-Brom-4-fluorphenyl)-N-(2-chlor-6-fluorphenyl)-1,3-dimethyl-1H-pyrazol-5-amin, (4.016) 4-(2-Brom-4-fluorphenyl)-N-(2-chlorphenyl)-1,3-dimethyl-1H-pyrazol-5-amin, (4.017) 4-(2-Brom-4-fluorphenyl)-N-(2-fluorphenyl)-1,3-dimethyl-1H-pyrazol-5-amin, (4.018) 4-(2-Chlor-4-fluorphenyl)-N-(2,6-difluorphenyl)-1,3-dimethyl-1H-pyrazol-5-amin, (4.019) 4-(2-Chlor-4-fluorphenyl)-N-(2-chlor-6-fluorphenyl)-1,3-dimethyl-1H-pyrazol-5-amin, (4.020) 4-(2-Chlor-4-fluorphenyl)-N-(2-chlorphenyl)-1,3-dimethyl-1H-pyrazol-5-amin, (4.021) 4-(2-Chlor-4-fluorphenyl)-N-(2-fluorphenyl)-1,3-dimethyl-1H-pyrazol-5-amin, (4.022) 4-(4-Chlorphenyl)-5-(2,6-difluorphenyl)-3,6-dimethylpyridazin, (4.023) N-(2-Brom-6-fluorphenyl)-4-(2-chlor-4-fluorphenyl)-1,3-dimethyl-1H-pyrazol-5-amin, (4.024) N-(2-Bromphenyl)-4-(2-chlor-4-fluorphenyl)-1,3-dimethyl-1H-pyrazol-5-amin, (4.025) N-(4-Chlor-2,6-difluorphenyl)-4-(2-chlor-4-fluorphenyl)-1,3-dimethyl-1H-pyrazol-5-amin.
5) Verbindungen mit Befähigung zu Multisite-Aktivität, beispielsweise (5.001) Bordeauxmischung, (5.002) Captafol, (5.003) Captan, (5.004) Chlorthalonil, (5.005) Kupferhydroxid, (5.006) Kupfernaphthenat, (5.007) Kupferoxid, (5.008) Kupferoxychlorid, (5.009) Kupfer(2+)-sulfat, (5.010) Dithianon, (5.011) Dodin, (5.012) Folpet, (5.013) Mancozeb, (5.014) Maneb, (5.015) Metiram, (5.016) Zinkmetiram, (5.017) Kupfer-Oxin, (5.018) Propineb, (5.019) Schwefel und Schwefelzubereitungen einschließlich Calciumpolysulfid, (5.020) Thiram, (5.021) Zineb, (5.022) Ziram, (5.023) 6-Ethyl-5,7-dioxo-6,7-dihydro-5H-pyrrolo[3',4':5,6][1,4]dithiino[2,3-c][1,2]thiazole-3-carbonitrile.
6) Verbindungen, die zum Auslösen einer Wirtsabwehr befähigt sind, beispielsweise (6.001) Acibenzolar-S-Methyl, (6.002) Isotianil, (6.003) Probenazol, (6.004) Tiadinil.
7) Inhibitoren der Aminosäure- und/oder Protein-Biosynthese, beispielsweise (7.001) Cyprodinil, (7.002) Kasugamycin, (7.003) Kasugamycinhydrochlorid-hydrat, (7.004) Oxytetracyclin (7.005) Pyrimethanil, (7.006) 3-(5-Fluor-3,3,4,4-tetramethyl-3,4-dihydroisochinolin-1-yl)chinolin.
(8) Inhibitoren der ATP-Produktion, beispielsweise (8.001) Silthiofam.
9) Inhibitoren der Zellwandsynthese, beispielsweise (9.001) Benthiavalicarb, (9.002) Dimethomorph, (9.003) Flumorph, (9.004) Iprovalicarb, (9.005) Mandipropamid, (9.006) Pyrimorph, (9.007) Valifenalat, (9.008) (2E)-3-(4-tert.-Butylphenyl)-3-(2-chlorpyridin-4-yl)-1-(morpholin-4-yl)prop-2-en-1-on, (9.009) (2Z)-3-(4-tert.-Butylphenyl)-3-(2-chlorpyridin-4-yl)-1-(morpholin-4-yl)prop-2-en-1-on.
10) Inhibitoren der Lipid- und Membran-Synthese, beispielsweise (10.001) Propamocarb, (10.002) Propamocarbhydrochlorid, (10.003) Tolclofos-Methyl.
11) Inhibitoren der Melanin-Biosynthese, beispielsweise (11.001) Tricyclazol, (11.002) 2,2,2-Trifluorethyl-{3-methyl-1-[(4-methylbenzoyl)amino]butan-2-yl}carbamat.
12) Inhibitoren der Nukleinsäuresynthese, beispielsweise (12.001) Benalaxyl, (12.002) Benalaxyl-M (Kiralaxyl), (12.003) Metalaxyl, (12.004) Metalaxyl-M (Mefenoxam).
13) Inhibitoren der Signaltransduktion, beispielsweise (13.001) Fludioxonil, (13.002) Iprodion, (13.003) Procymidon, (13.004) Proquinazid, (13.005) Quinoxyfen, (13.006) Vinclozolin.
14) Verbindungen, die als Entkoppler wirken können, beispielsweise (14.001) Fluazinam, (14.002) Meptyldinocap.
15) Weitere Verbindungen, beispielsweise (15.001) Abscisinsäure, (15.002) Benthiazol, (15.003) Bethoxazin, (15.004) Capsimycin, (15.005) Carvon, (15.006) Chinomethionat, (15.007) Cufraneb, (15.008) Cyflufenamid, (15.009) Cymoxanil, (15.010) Cyprosulfamid, (15.011) Flutianil, (15.012) Fosetyl-Aluminium, (15.013) Fosetyl-Calcium, (15.014) Fosetyl-Natrium, (15.015) Methylisothiocyanat, (15.016) Metrafenon, (15.017) Mildiomycin, (15.018) Natamycin, (15.019) Nickel-Dimethyldithiocarbamat, (15.020) Nitrothal-Isopropyl, (15.021) Oxamocarb, (15.022) Oxathiapiprolin, (15.023) Oxyfenthiin, (15.024) Pentachlorphenol und Salze, (15.025) Phosphonsäure und deren Salze, (15.026) Propamocarb-fosetylat, (15.027) Pyriofenone (Chlazafenone) (15.028) Tebufloquin, (15.029) Tecloftalam, (15.030) Tolnifanide, (15.031) 1-(4-{4-[(5R)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, (15.032) 1-(4-{4-[(5S)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, (15.033) 2-(6-Benzylpyridin-2-yl)quinazolin, (15.034) 2,6-Dimethyl-1H,5H-[1,4]dithiino[2,3-c:5,6-c']dipyrrol-1,3,5,7(2H,6H)-tetron, (15.035) 2-[3,5-Bis(difluormethyl)-1H-pyrazol-1-yl]-1-[4-(4-{5-[2-(prop-2-in-1-yloxy)phenyl]-4,5-dihydro-1,2-oxazol-3-yl}-1,3-thiazol-2-yl)piperidin-1-yl]ethanon, (15.036) 2-[3,5-Bis(difluormethyl)-1H-pyrazol-1-yl]-1-[4-(4-{5-[2-chlor-6-(prop-2-in-1-yloxy)phenyl]-4,5-dihydro-1,2-oxazol-3-yl}-1,3-thiazol-2-yl)piperidin-1-yl]ethanon, (15.037) 2-[3,5-Bis(difluormethyl)-1H-pyrazol-1-yl]-1-[4-(4-{5-[2-fluor-6-(prop-2-in-1-yloxy)phenyl]-4,5-dihydro-1,2-oxazol-3-yl}-1,3-thiazol-2-yl)piperidin-1-yl]ethanon, (15.038) 2-[6-(3-Fluor-4-methoxyphenyl)-5-methylpyridin-2-yl]quinazolin, (15.039) 2-{(5R)-3-[2-(1-{[3,5-Bis(difluormethyl)-1H-pyrazol-1-yl]acetyl}piperidin-4-yl)-1,3-thiazol-4-yl]-4,5-dihydro-1,2-oxazol-5-yl}-3-chlorphenyl methanesulfonat, (15.040) 2-{(5S)-3-[2-(1-{[3,5-Bis(difluormethyl)-1H-pyrazol-1-yl]acetyl}piperidin-4-yl)-1,3-thiazol-4-yl]-4,5-dihydro-1,2-oxazol-5-yl}-3-chlorphenyl methanesulfonat, (15.041) 2-{2-[(7,8-Difluor-2-methylquinolin-3-yl)oxy]-6-fluorphenyl}propan-2-ol, (15.042) 2-{2-Fluor-6-[(8-fluor-2-methylquinolin-3-yl)oxy]phenyl}propan-2-ol, (15.043) 2-{3-[2-(1-{[3,5-Bis(difluormethyl)-1H-pyrazol-1-yl]acetyl}piperidin-4-yl)-1,3-thiazol-4-yl]-4,5-dihydro-1,2-oxazol-5-yl}-3-chlorphenyl-methansulfonat, (15.044) 2-{3-[2-(1-{[3,5-Bis(difluormethyl)-1H-pyrazol-1-yl]acetyl}piperidin-4-yl)-1,3-thiazol-4-yl]-4,5-dihydro-1,2-oxazol-5-yl}phenyl methanesulfonat, (15.045) 2-Phenylphenol und deren Salze, (15.046) 3-(4,4,5-Trifluor-3,3-dimethyl-3,4-dihydroisoquinolin-1-yl)quinolin, (15.047) 3-(4,4-Difluor-3,3-dimethyl-3,4-dihydroisoquinolin-1-yl)quinolin, (15.048) 4-Amino-5-fluorpyrimidin-2-ol (Tautomere Form: 4-Amino-5-fluorpyrimidin-2(1H)-on), (15.049) 4-Oxo-4-[(2-phenylethyl)amino]buttersäure, (15.050) 5-Amino-1,3,4-thiadiazol-2-thiol, (15.051) 5-Chlor-N'-phenyl-N'-(prop-2-yn-1-yl)thiophen-2-sulfonohydrazid, (15.052) 5-Fluor-2-[(4-fluorbenzyl)oxy]pyrimidin-4-amin, (15.053) 5-Fluor-2-[(4-methylbenzyl)oxy]pyrimidin-4-amin, (15.054) 9-Fluor-2,2-dimethyl-5-(quinolin-3-yl)-2,3-dihydro-1,4-benzoxazepin, (15.055) But-3-yn-1-yl {6-[({[(Z)-(1-methyl-1H-tetrazol-5-yl)(phenyl)methylen]amino}oxy)methyl]pyridin-2-yl}carbamat, (15.056) Ethyl (2Z)-3-amino-2-cyano-3-phenylacrylat, (15.057) Phenazin-1-carbonsäure, (15.058) Propyl 3,4,5-trihydroxybenzoat, (15.059) Quinolin-8-ol, (15.060) Quinolin-8-ol sulfat (2:1), (15.061) tert-Butyl {6-[({[(1-methyl-1H-tetrazol-5-yl)(phenyl)methylene]amino}oxy)methyl]pyridin-2-yl}carbamat, (15.062) 5-Fluor-4-imino-3-methyl-1-[(4-methylphenyl)sulfonyl]-3,4-dihydropyrimidin-2(1H)-one.Insektizide Wirkstoffe sind beispielsweise:
   (1) Acetylcholinesterase (AChE) Inhibitoren, wie beispielsweise Carbamate, z.B. Alanycarb, Aldicarb, Bendiocarb, Benfuracarb, Butocarboxim, Butoxycarboxim, Carbaryl, Carbofuran, Carbosulfan, Ethiofencarb, Fenobucarb, Formetanate, Furathiocarb, Isoprocarb, Methiocarb, Methomyl, Metolcarb, Oxamyl, Pirimicarb, Propoxur, Thiodicarb, Thiofanox, Triazamate, Trimethacarb, XMC und Xylylcarb oder organophosphate, z.B. Acephate, Azamethiphos, Azinphos-ethyl, Azinphos-methyl, Cadusafos, Chlorethoxyfos, Chlorfenvinphos, Chlormephos, Chlorpyrifos, Chlorpyrifos-methyl, Coumaphos, Cyanophos, Demeton-S-methyl, Diazinon, Dichlorvos/DDVP, Dicrotophos, Dimethoate, Dimethylvinphos, Disulfoton, EPN, Ethion, Ethoprophos, Famphur, Fenamiphos, Fenitrothion, Fenthion, Fosthiazate, Heptenophos, Imicyafos, Isofenphos, Isopropyl O-(methoxyaminothio-phosphoryl) salicylat, Isoxathion, Malathion, Mecarbam, Methamidophos, Methidathion, Mevinphos, Monocrotophos, Naled, Omethoate, Oxydemeton-methyl, Parathion, Parathion-methyl, Phenthoate, Phorate, Phosalone, Phosmet, Phosphamidon, Phoxim, Pirimiphos-methyl, Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Triclorfon und Vamidothion.
   (2) GABA-gesteuerte Chlorid-Kanal-Antagonisten, wie beispielsweise Cyclodien-organochlorine, z.B. Chlordane und Endosulfan oder Phenylpyrazole (Fiprole), z.B. Ethiprole und Fipronil.
   (3) Natrium-Kanal-Modulatoren / Spannungsabhängige Natrium-Kanal-Blocker, wie beispielsweise Pyrethroide, z.B. Acrinathrin, Allethrin, d-cis-trans Allethrin, d-trans Allethrin, Bifenthrin, Bioallethrin, Bioallethrin S-cyclopentenyl Isomer, Bioresmethrin, Cycloprothrin, Cyfluthrin, beta-Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin [(1R)-trans-Isomere], Deltamethrin, Empenthrin [(EZ)-(1R)-Isomere), Esfenvalerate, Etofenprox, Fenpropathrin, Fenvalerate, Flucythrinate, Flumethrin, tau-Fluvalinate, Halfenprox, Imiprothrin, Kadethrin, Momfluorothrin, Permethrin, Phenothrin [(1R)-trans-Isomer), Prallethrin, Pyrethrine (pyrethrum), Resmethrin, Silafluofen, Tefluthrin, Tetramethrin, Tetramethrin [(1R)- Isomere)], Tralomethrin und Transfluthrin oder DDT oder Methoxychlor.
   (4) Nikotinerge Acetylcholin-Rezeptor (nAChR) Agonisten, wie beispielsweise Neonikotinoide, z.B. Acetamiprid, Clothianidin, Dinotefuran, Imidacloprid, Nitenpyram, Thiacloprid und Thiamethoxam oder Nikotin oder Sulfoxaflor oder Flupyradifurone.
   (5) Nikotinerge Acetylcholin-Rezeptor (nAChR) allosterische Aktivatoren, wie beispielsweise Spinosine, z.B. Spinetoram und Spinosad.
   (6) Chlorid-Kanal-Aktivatoren, wie beispielsweise Avermectine/Milbemycine, z.B. Abamectin, Emamectin-benzoat, Lepimectin und Milbemectin.
   (7) Juvenilhormon-Imitatoren, wie beispielsweise Juvenilhormon-Analoge, z.B. Hydroprene, Kinoprene und Methoprene oder Fenoxycarb oder Pyriproxyfen.
   (8) Wirkstoffe mit unbekannten oder nicht spezifischen Wirkmechanismen, wie beispielsweise Alkylhalide, z.B. Methylbromid und andere Alkylhalide; oderChloropicrin oder Sulfurylfluorid oder Borax oder Brechweinstein.
   (9) Selektive Fraßhemmer, z.B. Pymetrozine oder Flonicamid.
   (10) Milbenwachstumsinhibitoren, z.B. Clofentezine, Hexythiazox und Diflovidazin oder Etoxazole.
   (11) Mikrobielle Disruptoren der Insektendarmmembran, z.B. Bacillus thuringiensis Subspezies israelensis, Bacillus sphaericus, Bacillus thuringiensis Subspezies aizawai, Bacillus thuringiensis Subspezies kurstaki, Bacillus thuringiensis Subspezies tenebrionis und BT Pflanzenproteine: Cry1Ab, Cry1Ac, Cry1Fa, Cry2Ab, mCry3A, Cry3Ab, Cry3Bb, Cry34/35Ab1.
   (12) Inhibitoren der oxidativen Phosphorylierung, ATP-Disruptoren, wie beispielsweise Diafenthiuron oder organozinnverbindungen, z.B. Azocyclotin, Cyhexatin und Fenbutatin-oxid oder Propargite oder Tetradifon.
   (13) Entkoppler der oxidativen Phoshorylierung durch Unterbrechung des H-Protongradienten, wie beispielsweise Chlorfenapyr, DNOC und Sulfluramid.
   (14) Nikotinerge Acetylcholin-Rezeptor-Antagonisten, wie beispielsweise Bensultap, Cartap-hydrochlorid, Thiocyclam und Thiosultap-Natrium.
   (15) Inhibitoren der Chitinbiosynthese, Typ 0, wie beispielsweise Bistrifluron, Chlorfluazuron, Diflubenzuron, Flucycloxuron, Flufenoxuron, Hexaflumuron, Lufenuron, Novaluron, Noviflumuron, Teflubenzuron und Triflumuron.
   (16) Inhibitoren der Chitinbiosynthese, Typ 1, wie beispielsweise Buprofezin.
   (17) Häutungsstörende Wirkstoffe, Dipteran, wie beispielsweise Cyromazine.
   (18) Ecdyson-Rezeptor Agonisten, wie beispielsweise Chromafenozide, Halofenozide, Methoxyfenozide und Tebufenozide.
   (19) Oktopaminerge Agonisten, wie beispielsweise Amitraz.
   (20) Komplex-III-Elektronentransportinhibitoren, wie beispielsweise Hydramethylnon oder Acequinocyl oder Fluacrypyrim.
   (21) Komplex-I-Elektronentransportinhibitoren, beispielsweise METI-Akarizide, z.B. Fenazaquin, Fenpyroximate, Pyrimidifen, Pyridaben, Tebufenpyrad und Tolfenpyrad oder Rotenone (Derris).
   (22) Spannungsabhängige Natriumkanal-Blocker, z.B. Indoxacarb oder Metaflumizone.
   (23) Inhibitoren der Acetyl-CoA-Carboxylase, wie beispielsweise Tetron- und Tetramsäurederivate, z.B. Spirobudiclofen, Spirodiclofen, Spiromesifen und Spirotetramat.
   (24) Komplex-IV-Elektronentransportinhibitoren, wie beispielsweise Phosphine, z.B. Aluminiumphosphid, Calciumphosphid, Phosphin und Zinkphosphid oder Cyanid.
   (25) Komplex-II-Elektronentransportinhibitoren, wie beispielsweise Cyenopyrafen und Cyflumetofen.
   (28) Ryanodinrezeptor-Effektoren, wie beispielsweise Diamide, z.B. Chlorantraniliprole, Cyantraniliprole, Flubendiamide und Tetrachloroantraniliprole.

Weitere insektizide Wirkstoffe mit unbekanntem oder nicht eindeutigem Wirkmechanismus, wie beispielsweise Afidopyropen, Afoxolaner, Azadirachtin, Benclothiaz, Benzoximate, Bifenazate, Broflanilide, Bromopropylate, Chinomethionat, Cryolite, Cyclaniliprole, Cycloxaprid, Cyhalodiamide Dicloromezotiaz, Dicofol, Diflovidazin, Flometoquin, Fluazaindolizine, Fluensulfone, Flufenerim, Flufenoxystrobin, Flufiprole, Fluhexafon, Fluopyram, Fluralaner, Fluxametamide, Fufenozide, Guadipyr, Heptafluthrin, Imidaclothiz, Iprodione, Lotilaner, Meperfluthrin, Paichongding, Pyflubumide, Pyridalyl, Pyrifluquinazon, Pyriminostrobin, Sarolaner, Tetramethylfluthrin, Tetraniliprole, Tetrachlorantraniliprole, Tioxazafen, Thiofluoximate, Triflumezopyrim und Iodmethane; desweiteren Präparate auf Basis vonBacillus firmus (I-1582, BioNeem, Votivo), sowie folgende bekannte wirksame Verbindungen: 1-{2-Fluor-4-methyl-5-[(2,2,2-trifluorethyl)sulfinyl]phenyl}-3-(trifluormethyl)-1H-1,2,4-triazol-5-amin (bekannt aus WO2006/043635), {1'-[(2E)-3-(4-Chlorphenyl)prop-2-en-1-yl]-5-fluorspiro[indol-3,4'-piperidin]-1(2H)-yl}(2-chlorpyridin-4-yl)methanon (bekannt aus WO2003/106457), 2-Chlor-N-[2-{1-[(2E)-3-(4-chlorphenyl)prop-2-en-1-yl]piperidin-4-yl}-4-(trifluormethyl)phenyl]isonicotinamid (bekannt aus WO2006/003494), 3-(2,5-Dimethylphenyl)-4-hydroxy-8-methoxy-1,8-diazaspiro[4.5]dec-3-en-2-on (bekannt aus WO2009/049851), 3-(2,5-Dimethylphenyl)-8-methoxy-2-oxo-1,8-diazaspiro[4.5]dec-3-en-4-yl-ethylcarbonat (bekannt aus WO2009/049851), 4-(But-2-in-1-yloxy)-6-(3,5-dimethylpiperidin-1-yl)-5-fluorpyrimidin (bekannt aus WO2004/099160), 4-(But-2-in-1-yloxy)-6-(3-chlorphenyl)pyrimidin (bekannt aus WO2003/076415), PF1364 (CAS-Reg.No. 1204776-60-2), Methyl-2-[2-({[3-brom-1-(3-chlorpyridin-2-yl)-1H-pyrazol-5-yl]carbonyl}amino)-5-chlor-3-methylbenzoyl]-2-methylhydrazincarboxylat (bekannt aus WO2005/085216), Methyl-2-[2-({[3-brom-1-(3-chlorpyridin-2-yl)-1H-pyrazol-5-yl]carbonyl}amino)-5-cyan-3-methylbenzoyl]-2-ethylhydrazincarboxylat (bekannt aus WO2005/085216), Methyl-2-[2-({[3-brom-1-(3-chlorpyridin-2-yl)-1H-pyrazol-5-yl]carbonyl}amino)-5-cyan-3-methylbenzoyl]-2-methylhydrazincarboxylat (bekannt aus WO2005/085216), Methyl-2-[3,5-dibrom-2-({[3-brom-1-(3-chlorpyridin-2-yl)-1H-pyrazol-5-yl]carbonyl}amino)benzoyl]-2-ethylhydrazincarboxylat (bekannt aus WO2005/085216), N-[2-(5-Amino-1,3,4-thiadiazol-2-yl)-4-chlor-6-methylphenyl]-3-brom-1-(3-chlorpyridin-2-yl)-1H-pyrazol-5-carboxamid (bekannt aus CN102057925), 4-[5-(3,5-Dichlorphenyl)-5-(trifluormethyl)-4,5-dihydro-1,2-oxazol-3-yl]-2-methyl-N-(1-oxidothietan-3-yl)benzamid (bekannt aus WO2009/080250), N-[(2E)-1-[(6-Chlorpyridin-3-yl)methyl]pyridin-2(1H)-yliden]-2,2,2-trifluoracetamid (bekannt aus WO2012/029672), 1-[(2-Chlor-1,3-thiazol-5-yl)methyl]-4-oxo-3-phenyl-4H-pyrido[1,2-a]pyrimidin-1-ium-2-olat (bekannt aus WO2009/099929), 1-[(6-Chlorpyridin-3-yl)methyl]-4-oxo-3-phenyl-4H-pyrido[1,2-a]pyrimidin-1-ium-2-olat (bekannt aus WO2009/099929), 4-(3-{2,6-Dichlor-4-[(3,3-dichlorprop-2-en-1-yl)oxy]phenoxy}propoxy)-2-methoxy-6-(trifluormethyl)pyrimidin (bekannt aus CN101337940), N-[2-(tert-Butylcarbamoyl)-4-chlor-6-methylphenyl]-1-(3-chlorpyridin-2-yl)-3-(fluormethoxy)-1H-pyrazol-5-carboxamid (bekannt aus WO2008/134969), Butyl-[2-(2,4-dichlorphenyl)-3-oxo-4-oxaspiro[4.5]dec-1-en-1-yl]-carbonat (bekannt aus CN 102060818), 3E)-3-[1-[(6-Chlor-3-pyridyl)methyl]-2-pyridyliden]-1,1,1-trifluor-propan-2-on (bekannt aus WO2013/144213), N-(Methylsulfonyl)-6-[2-(pyridin-3-yl)-1,3-thiazol-5-yl]pyridin-2-carboxamid (bekannt aus WO2012/000896), N-[3-(Benzylcarbamoyl)-4-chlorphenyl]-1-methyl-3-(pentafluorethyl)-4-(trifluormethyl)-1H-pyrazol-5-carboxamid (bekannt aus WO2010/051926), 5-Brom-4-chlor-N-[4-chlor-2-methyl-6-(methylcarbamoyl)phenyl]-2-(3-chlor-2-pyridyl)pyrazole-3-carboxamid (bekannt aus CN103232431), Tioxazafen, 4-[5-(3,5-Dichlorphenyl)-4,5-dihydro-5-(trifluormethyl)-3-isoxazolyl]-2-methyl-N-(cis-1-oxido-3-thietanyl)-benzamid, 4-[5-(3,5-Dichlorphenyl)-4,5-dihydro-5-(trifluormethyl)-3-isoxazolyl]-2-methyl-N-(trans-1-oxido-3-thietanyl)-benzamid und 4-[(5S)-5-(3,5-Dichlorphenyl)-4,5-dihydro-5-(trifluormethyl)-3-isoxazolyl]-2-methyl-N-(cis-1-oxido-3-thietanyl)benzamid (bekannt aus WO 2013050317A1), N-[3-Chlor-1-(3-pyridinyl)-1H-pyrazol-4-yl]-N-ethyl-3-[(3,3,3-trifluorpropyl)sulfinyl]-propanamid, (+)-N-[3-Chlor-1-(3-pyridinyl)-1H-pyrazol-4-yl]-N-ethyl-3-[(3,3,3-trifluorpropyl)sulfinyl]-propanamid und (-)-N-[3-Chlor-1-(3-pyridinyl)-1H-pyrazol-4-yl]-N-ethyl-3-[(3,3,3-trifluorpropyl)sulfinyl]-propanamid (bekannt aus WO 2013162715 A2, WO 2013162716 A2, US 20140213448 A1), 5-[[(2E)-3-Chlor-2-propen-1-yl]amino]-1-[2,6-dichlor-4-(trifluoromethyl)phenyl]-4-[(trifluormethyl)sulfinyl]-1H-pyrazol-3-carbonitril (bekannt aus CN 101337937 A), 3-Brom-N-[4-chlor-2-methyl-6-[(methylamino)thioxomethyl]phenyl]-1-(3-chlor-2-pyridinyl)-1H-pyrazol-5-carboxamid, (Liudaibenjiaxuanan, bekannt aus CN 103109816 A); N-[4-Chlor-2-[[(1,1-dimethylethyl)amino]carbonyl]-6-methylphenyl]-1-(3-chlor-2-pyridinyl)-3-(fluormethoxy)-1H-pyrazol-5-carboxamid (bekannt aus WO 2012034403 A1), N-[2-(5-Amino-1,3,4-thiadiazol-2-yl)-4-chlor-6-methylphenyl]-3-brom-1-(3-chlor-2-pyridinyl)-1H-pyrazol-5-carboxamid (bekannt aus WO 2011085575 A1), 4-[3-[2,6-Dichlor-4-[(3,3-dichlor-2-propen-1-yl)oxy]phenoxy]propoxy]-2-methoxy-6-(trifluormethyl)-pyrimidin (bekannt aus CN 101337940 A); (2E)- und 2(Z)-2-[2-(4-Cyanophenyl)-1-[3-(trifluormethyl)phenyl]ethylidene]-N-[4-(difluormethoxy)phenyl]-hydrazine-carboxamid (bekannt aus CN 101715774 A); 3-(2,2-Dichloroethenyl)-2,2-dimethyl-4-(1H-benzimidazol-2-yl)phenyl-cyclopropan-carbonsäureester (bekannt aus CN 103524422 A); (4aS)-7-Chlor-2,5-dihydro-2-[[(methoxycarbonyl)[4-[(trifluormethyl)thio]phenyl]amino]carbonyl]-indeno[1,2-e][1,3,4]oxadiazine-4a(3H)-carbosäuremethylester (bekannt aus CN 102391261 A).

Beispiele für herbiziden Mischungspartner sind:
Acetochlor, acifluorfen, acifluorfen-sodium, aclonifen, alachlor, allidochlor, alloxydim, alloxydimsodium, ametryn, amicarbazone, amidochlor, amidosulfuron, 4-amino-3-chloro-6-(4-chloro-2-fluoro-3-methylphenyl)-5-fluoropyridine-2-carboxylic acid, aminocyclopyrachlor, aminocyclopyrachlorpotassium, aminocyclopyrachlor-methyl, aminopyralid, amitrole, ammoniumsulfamate, anilofos, asulam, atrazine, azafenidin, azimsulfuron, beflubutamid, benazolin, benazolin-ethyl, benfluralin, benfuresate, bensulfuron, bensulfuron-methyl, bensulide, bentazone, benzobicyclon, benzofenap, bicyclopyron, bifenox, bilanafos, bilanafos-sodium, bispyribac, bispyribac-sodium, bromacil, bromobutide, bromofenoxim, bromoxynil, bromoxynil-butyrate, -potassium, -heptanoate und -octanoate, busoxinone, butachlor, butafenacil, butamifos, butenachlor, butralin, butroxydim, butylate, cafenstrole, carbetamide, carfentrazone, carfentrazone-ethyl, chloramben, chlorbromuron, chlorfenac, chlorfenacsodium, chlorfenprop, chlorflurenol, chlorflurenol-methyl, chloridazon, chlorimuron, chlorimuron-ethyl, chlorophthalim, chlorotoluron, chlorthal-dimethyl, chlorsulfuron, cinidon, cinidon-ethyl, cinmethylin, cinosulfuron, clacyfos, clethodim, clodinafop, clodinafop-propargyl, clomazone, clomeprop, clopyralid, cloransulam, cloransulam-methyl, cumyluron, cyanamide, cyanazine, cycloate, cyclopyrimorate, cyclosulfamuron, cycloxydim, cyhalofop, cyhalofop-butyl, cyprazine, 2,4-D, 2,4-D-butotyl, -butyl, - dimethylammonium, -diolamin, -ethyl, 2-ethylhexyl, -isobutyl, -isooctyl, -isopropylammonium, - potassium, -triisopropanolammonium und -trolamine, 2,4-DB, 2,4-DB-butyl, -dimethylammonium, isooctyl, -potassium und -sodium, daimuron (dymron), dalapon, dazomet, n-decanol, desmedipham, detosyl-pyrazolate (DTP), dicamba, dichlobenil, 2-(2,4-dichlorobenzyl)-4,4-dimethyl-1,2-oxazolidin-3-one, 2-(2,5-dichlorobenzyl)-4,4-dimethyl-1,2-oxazolidin-3-one, dichlorprop, dichlorprop-P, diclofop, diclofop-methyl, diclofop-P-methyl, diclosulam, difenzoquat, diflufenican, diflufenzopyr, diflufenzopyr-sodium, dimefuron, dimepiperate, dimethachlor, dimethametryn, dimethenamid, dimethenamid-P, dimetrasulfuron, dinitramine, dinoterb, diphenamid, diquat, diquat-dibromid, dithiopyr, diuron, DNOC, endothal, EPTC, esprocarb, ethalfluralin, ethametsulfuron, ethametsulfuron-methyl, ethiozin, ethofumesate, ethoxyfen, ethoxyfen-ethyl, ethoxysulfuron, etobenzanid, F-9600, F-5231, i.e. N-[2-Chlor-4-fluor-5-[4-(3-fluorpropyl)-4,5-dihydro-5-oxo-1H-tetrazol-1-yl]-phenyl]-ethansulfonamid, F-7967, i.e. 3-[7-Chlor-5-fluor-2-(trifluormethyl)-1H-benzimidazol-4-yl]-1-methyl-6-(trifluormethyl)pyrimidin-2,4(1H,3H)-dion, fenoxaprop, fenoxaprop-P, fenoxaprop-ethyl, fenoxaprop-P-ethyl, fenoxasulfone, fenquinotrione, fentrazamide, flamprop, flamprop-M-isopropyl, flamprop-M-methyl, flazasulfuron, florasulam, fluazifop, fluazifop-P, fluazifop-butyl, fluazifop-P-butyl, flucarbazone, flucarbazone-sodium, flucetosulfuron, fluchloralin, flufenacet, flufenpyr, flufenpyr-ethyl, flumetsulam, flumiclorac, flumiclorac-pentyl, flumioxazin, fluometuron, flurenol, flurenol-butyl, - dimethylammonium und -methyl, fluoroglycofen, fluoroglycofen-ethyl, flupropanate, flupyrsulfuron, flupyrsulfuron-methyl-sodium, fluridone, flurochloridone, fluroxypyr, fluroxypyr-meptyl, flurtamone, fluthiacet, fluthiacet-methyl, fomesafen, fomesafen-sodium, foramsulfuron, fosamine, glufosinate, glufosinate-ammonium, glufosinate-P-sodium, glufosinate-P-ammonium, glufosinate-P-sodium, glyphosate, glyphosate-ammonium, -isopropylammonium, -diammonium, -dimethylammonium, - potassium, -sodium und -trimesium, H-9201, i.e. O-(2,4-Dimethyl-6-nitrophenyl)-O-ethyl-isopropylphosphoramidothioat, halauxifen, halauxifen-methyl, halosafen, halosulfuron, halosulfuronmethyl, haloxyfop, haloxyfop-P, haloxyfop-ethoxyethyl, haloxyfop-P-ethoxyethyl, haloxyfop-methyl, haloxyfop-P-methyl, hexazinone, HW-02, i.e. 1-(Dimethoxyphosphoryl)-ethyl-(2,4-dichlorphenoxy)acetat, imazamethabenz, Imazamethabenz-methyl, imazamox, imazamox-ammonium, imazapic, imazapic-ammonium, imazapyr, imazapyr-isopropylammonium, imazaquin, imazaquinammonium, imazethapyr, imazethapyr-immonium, imazosulfuron, indanofan, indaziflam, iodosulfuron, iodosulfuron-methyl-sodium, ioxynil, ioxynil-octanoate, -potassium und sodium, ipfencarbazone, isoproturon, isouron, isoxaben, isoxaflutole, karbutilate, KUH-043, i.e. 3-({[5-(Difluormethyl)-1-methyl-3-(trifluormethyl)-1H-pyrazol-4-yl]methyl}sulfonyl)-5,5-dimethyl-4,5-dihydro-1,2-oxazol, ketospiradox, lactofen, lenacil, linuron, MCPA, MCPA-butotyl, -dimethylammonium, -2-ethylhexyl, - isopropylammonium, -potassium und -sodium, MCPB, MCPB-methyl, -ethyl und -sodium, mecoprop, mecoprop-sodium, und -butotyl, mecoprop-P, mecoprop-P-butotyl, -dimethylammonium, -2-ethylhexyl und -potassium, mefenacet, mefluidide, mesosulfuron, mesosulfuron-methyl, mesotrione, methabenzthiazuron, metam, metamifop, metamitron, metazachlor, metazosulfuron, methabenzthiazuron, methiopyrsulfuron, methiozolin, methyl isothiocyanate, metobromuron, metolachlor, S-metolachlor, metosulam, metoxuron, metribuzin, metsulfuron, metsulfuron-methyl, molinat, monolinuron, monosulfuron, monosulfuron-ester, MT-5950, i.e. N-[3-chlor-4-(1-methylethyl)-phenyl]-2-methylpentanamid, NGGC-011, napropamide, NC-310, i.e. 4-(2,4-Dichlorbenzoyl)-1-methyl-5-benzyloxypyrazol, neburon, nicosulfuron, nonanoic acid (Pelargonsäure), norflurazon, oleic acid (fatty acids), orbencarb, orthosulfamuron, oryzalin, oxadiargyl, oxadiazon, oxasulfuron, oxaziclomefon, oxyfluorfen, paraquat, paraquat dichloride, pebulate, pendimethalin, penoxsulam, pentachlorphenol, pentoxazone, pethoxamid, petroleum oils, phenmedipham, picloram, picolinafen, pinoxaden, piperophos, pretilachlor, primisulfuron, primisulfuron-methyl, prodiamine, profoxydim, prometon, prometryn, propachlor, propanil, propaquizafop, propazine, propham, propisochlor, propoxycarbazone, propoxycarbazone-sodium, propyrisulfuron, propyzamide, prosulfocarb, prosulfuron, pyraclonil, pyraflufen, pyraflufen-ethyl, pyrasulfotole, pyrazolynate (pyrazolate), pyrazosulfuron, pyrazosulfuronethyl, pyrazoxyfen, pyribambenz, pyribambenz-isopropyl, pyribambenz-propyl, pyribenzoxim, pyributicarb, pyridafol, pyridate, pyriftalid, pyriminobac, pyriminobac-methyl, pyrimisulfan, pyrithiobac, pyrithiobac-sodium, pyroxasulfone, pyroxsulam, quinclorac, quinmerac, quinoclamine, quizalofop, quizalofop-ethyl, quizalofop-P, quizalofop-P-ethyl, quizalofop-P-tefuryl, rimsulfuron, saflufenacil, sethoxydim, siduron, simazine, simetryn, SL-261, sulcotrion, sulfentrazone, sulfometuron, sulfometuron-methyl, sulfosulfuron, , SYN-523, SYP-249, i.e. 1-Ethoxy-3-methyl-1-oxobut-3-en-2-yl-5-[2-chlor-4-(trifluormethyl)phenoxy]-2-nitrobenzoat, SYP-300, i.e. 1-[7-Fluor-3-oxo-4-(prop-2-in-1-yl)-3,4-dihydro-2H-1,4-benzoxazin-6-yl]-3-propyl-2-thioxoimidazolidin-4,5-dion, 2,3,6-TBA, TCA (Trifluoressigsäure), TCA-sodium, tebuthiuron, tefuryltrione, tembotrione, tepraloxydim, terbacil, terbucarb, terbumeton, terbuthylazin, terbutryn, thenylchlor, thiazopyr, thiencarbazone, thiencarbazonemethyl, thifensulfuron, thifensulfuron-methyl, thiobencarb, tiafenacil, tolpyralate, topramezone, tralkoxydim, triafamone, tri-allate, triasulfuron, triaziflam, tribenuron, tribenuron-methyl, triclopyr, trietazine, trifloxysulfuron, trifloxysulfuron-sodium, trifludimoxazin, trifluralin, triflusulfuron, triflusulfuron-methyl, tritosulfuron, urea sulfate, vernolate, XDE-848, ZJ-0862, i.e. 3,4-Dichlor-N-{2-[(4,6-dimethoxypyrimidin-2-yl)oxy]benzyl}anilin, sowie die folgenden Verbindungen:

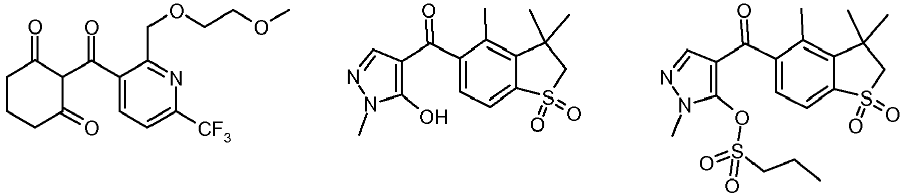

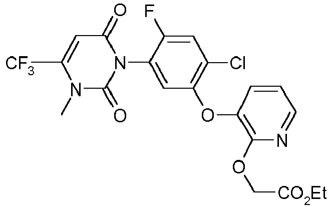

Beispiele für Pflanzenwachstumsregulatoren als mögliche Mischungspartner sind:
Acibenzolar, acibenzolar-S-methyl, 5-Aminolävulinsäure, ancymidol, 6-benzylaminopurine, Brassinolid, Catechin, chlormequat chloride, cloprop, cyclanilide, 3-(Cycloprop-1-enyl)propionsäure, daminozide, dazomet, n-decanol, dikegulac, dikegulac-sodium, endothal, endothal-dipotassium, -disodium, und mono(N,N-dimethylalkylammonium), ethephon, flumetralin, flurenol, flurenol-butyl, flurprimidol, forchlorfenuron, gibberellic acid, inabenfide, indol-3-acetic acid (IAA), 4-indol-3-ylbutyric acid, isoprothiolane, probenazole, Jasmonsäure, Jasmonsäuremethylester, maleic hydrazide, mepiquat chloride, 1-methylcyclopropene, 2-(1-naphthyl)acetamide, 1-naphthylacetic acid, 2- naphthyloxyacetic acid, nitrophenolate-mixture, 4-Oxo-4[(2-phenylethyl)amino]buttersäure, paclobutrazol, N-phenylphthalamic acid, prohexadione, prohexadione-calcium, prohydrojasmone, Salicylsäure, Strigolacton, tecnazene, thidiazuron, triacontanol, trinexapac, trinexapac-ethyl, tsitodef, uniconazole, uniconazole-P.

Ganz besonders bevorzugt wird komponente a) mit einem Wirkstoff d) aus der Gruppe der Herbizide, bevorzugt aus der Gruppe der Auxine wie etwa Halauxifen-methyl (0,05-5 Gew.-%) und/oder aus der Gruppe der Inhibitoren der Pigment Synthese (Pigment Bleicher, "bleacher") wie etwa Diflufenican 5-30% und aus der Gruppe der DOXP Synthase Hemmer wie etwa Clomazone und/oder aus der Gruppe der VLCFA Hemmer ("very long chain fatty acid", Hemmung der Zellteilung zur Herstellung von Fettsäuren) Flufenacet (5-30 Gew.-%) oder Pyroxasulfone kombiniert. Bevorzugt werden Flufenacet und/oder Dilflufenikan verwendet.

Darüber hinaus können die erfindungsgemäßen SC's einen Safener e) enthalten. Folgende Gruppen von Verbindungen kommen beispielsweise als Safener (Komponente e) in Frage:
S1) Verbindungen aus der Gruppe heterocyclischer Carbonsäurederivate:
S1^{a}) Verbindungen vom Typ der Dichlorphenylpyrazolin-3-carbonsäure (S1^{a}), vorzugsweise Verbindungen wie
   1-(2,4-Dichlorphenyl)-5-(ethoxycarbonyl)-5-methyl-2-pyrazolin-3-carbonsäure, 1-(2,4-Dichlorphenyl)-5-(ethoxycarbonyl)-5-methyl-2-pyrazolin-3-carbonsäureethylester (S1-1) ("Mefenpyr-diethyl"), und verwandte Verbindungen, wie sie in der WO-A-91/07874 beschrieben sind;
S1^{b}) Derivate der Dichlorphenylpyrazolcarbonsäure (S1^{b}), vorzugsweise Verbindungen wie 1-(2,4-Dichlorphenyl)-5-methylpyrazol-3-carbonsäureethylester (S1-2), 1-(2,4-Dichlorphenyl)-5-isopropylpyrazol-3-carbonsäureethylester (S1-3), 1-(2,4-Dichlorphenyl)-5-(1,1-dimethyl-ethyl)pyrazol-3-carbonsäureethylester (S1-4) und verwandte Verbindungen, wie sie in EP-A-333 131 und EP-A-269 806 beschrieben sind;
S1^{c}) Derivate der 1,5-Diphenylpyrazol-3-carbonsäure (S1^{c}), vorzugsweise Verbindungen wie 1-(2,4-Dichlorphenyl)-5-phenylpyrazol-3-carbonsäureethylester (S1-5), 1-(2-Chlorphenyl)-5-phenylpyrazol-3-carbonsäuremethylester (S1-6) und verwandte Verbindungen wie sie beispielsweise in der EP-A-268554 beschrieben sind;
S1^{d}) Verbindungen vom Typ der Triazolcarbonsäuren (S1^{d}), vorzugsweise Verbindungen wie Fenchlorazol(-ethylester), d.h. 1-(2,4-Dichlorphenyl)-5-trichlormethyl-(1H)-1,2,4-triazol-3-carbonsäureethylester (S1-7), und verwandte Verbindungen, wie sie in EP-A-174 562 und EP-A-346 620 beschrieben sind;
S1^{e}) Verbindungen vom Typ der 5-Benzyl- oder 5-Phenyl-2-isoxazolin-3- carbonsäure, oder der 5,5-Diphenyl-2-isoxazolin-3-carbonsäure(S1^{e}), vorzugsweise Verbindungen wie 5-(2,4-Dichlorbenzyl)-2-isoxazolin-3-carbonsäureethylester (S1-8) oder 5-Phenyl-2-isoxazolin-3-carbonsäureethylester (S1-9) und verwandte Verbindungen, wie sie in WO-A-91/08202 beschrieben sind, bzw. 5,5-Diphenyl-2-isoxazolin-carbonsäure (S1-10) oder 5,5-Diphenyl-2-isoxazolin-3-carbonsäureethylester (S1-11) ("Isoxadifen-ethyl") oder -n-propylester (S1-12) oder 5-(4-Fluorphenyl)-5-phenyl-2-isoxazolin-3-carbonsäureethylester (S1-13), wie sie in der Patentanmeldung WO-A-95/07897 beschrieben sind.
S2) Verbindungen aus der Gruppe der 8-Chinolinoxyderivate (S2):
S2^{a}) Verbindungen vom Typ der 8-Chinolinoxyessigsäure (S2^{a}), vorzugsweise
   (5-Chlor-8-chinolinoxy)essigsäure-(1-methylhexyl)-ester ("Cloquintocet-mexyl") (S2-1),
   (5-Chlor-8-chinolinoxy)essigsäure-(1,3-dimethyl-but-1-yl)-ester (S2-2),
   (5-Chlor-8-chinolinoxy)essigsäure-4-allyl-oxy-butylester (S2-3),
   (5-Chlor-8-chinolinoxy)essigsäure-1-allyloxy-prop-2-ylester (S2-4),
   (5-Chlor-8-chinolinoxy)essigsäureethylester (S2-5),
   (5-Chlor-8-chinolinoxy)essigsäuremethylester (S2-6),
   (5-Chlor-8-chinolinoxy)essigsäureallylester (S2-7),
   (5-Chlor-8-chinolinoxy)essigsäure-2-(2-propyliden-iminoxy)-1 -ethylester (S2-8),
   (5-Chlor-8-chinolinoxy)essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind, sowie (5-Chlor-8-chinolinoxy)essigsäure (S2-10), deren Hydrate und Salze, beispielsweise deren Lithium-, Natrium- Kalium-, Kalzium-, Magnesium-, Aluminium-, Eisen-, Ammonium-, quartäre Ammonium-, Sulfonium-, oder Phosphoniumsalze wie sie in der WO-A-2002/34048 beschrieben sind;
S2^{b}) Verbindungen vom Typ der (5-Chlor-8-chinolinoxy)malonsäure (S2^{b}), vorzugsweise Verbindungen wie (5-Chlor-8-chinolinoxy)malonsäurediethylester, (5-Chlor-8-chinolinoxy)malonsäurediallylester, (5-Chlor-8-chinolinoxy)malonsäure-methyl-ethylester und verwandte Verbindungen, wie sie in EP-A-0 582 198 beschrieben sind.
S3) Wirkstoffe vom Typ der Dichloracetamide (S3), die häufig als Vorauflaufsafener (bodenwirksame Safener) angewendet werden, wie z. B.
   "Dichlormid" (N,N-Diallyl-2,2-dichloracetamid) (S3-1),
   "R-29148" (3-Dichloracetyl-2,2,5-trimethyl-1,3-oxazolidin) der Firma Stauffer (S3-2),
   "R-28725" (3-Dichloracetyl-2,2,-dimethyl-1,3-oxazolidin) der Firma Stauffer (S3-3),
   "Benoxacor" (4-Dichloracetyl-3,4-dihydro-3-methyl-2H-1,4-benzoxazin) (S3-4),
   "PPG-1292" (N-Allyl-N-[(1,3-dioxolan-2-yl)-methyl]-dichloracetamid) der Firma PPG Industries (S3-5),
   "DKA-24" (N-Allyl-N-[(allylaminocarbonyl)methyl]-dichloracetamid) der Firma Sagro-Chem (S3-6),
   "AD-67" oder "MON 4660" (3-Dichloracetyl-1-oxa-3-aza-spiro[4,5]decan) der Firma Nitrokemia bzw. Monsanto (S3-7),
   "TI-35" (1-Dichloracetyl-azepan) der Firma TRI-Chemical RT (S3-8),
   "Diclonon" (Dicyclonon) oder "BAS145138" oder "LAB145138" (S3-9) ((RS)-1-Dichloracetyl-3,3,8a-trimethylperhydropyrrolo[1,2-a]pyrimidin-6-on) der Firma BASF, "Furilazol" oder "MON 13900" ((RS)-3-Dichloracetyl-5-(2-furyl)-2,2-dimethyloxazolidin) (S3-10), sowie dessen (R)-Isomer (S3-11).
S4) Verbindungen aus der Klasse der Acylsulfonamide (S4):
S4^{a}) N-Acylsulfonamide der Formel (S4^{a}) und deren Salze wie sie in der WO-A-97/45016 beschrieben sind, 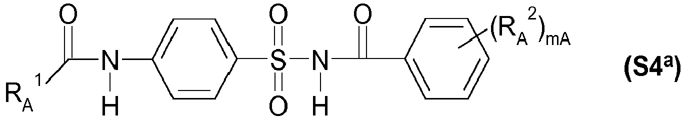 worin
   R_{A}¹ (C₁-C₆)Alkyl, (C₃-C₆)Cycloalkyl, wobei die 2 letztgenannten Reste durch v_{A} Substituenten aus der Gruppe Halogen, (C₁-C₄)Alkoxy, (C₁-C₆)Haloalkoxy und (C₁-C₄)Alkylthio und im Falle cyclischer Reste auch durch (C₁-C₄)Alkyl und (C₁-C₄)Haloalkyl substituiert sind;
   R_{A}² Halogen, (C₁-C₄)Alkyl, (C₁-C₄)Alkoxy, CF₃;
   m_{A} 1 oder 2;
   v_{A} ist 0, 1, 2 oder 3 bedeuten;
S4^{b}) Verbindungen vom Typ der 4-(Benzoylsulfamoyl)benzamide der Formel (S4^{b}) und deren Salze, wie sie in der WO-A-99/16744 beschrieben sind, 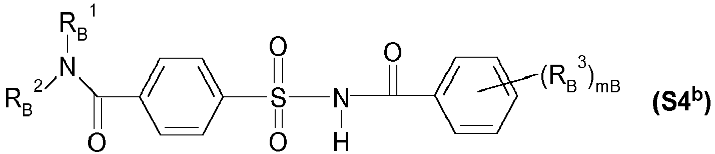 worin
   - R_{B}¹, R_{B}²: unabhängig voneinander Wasserstoff, (C₁-C₆)Alkyl, (C₃-C₆)Cycloalkyl, (C₃-C₆)Alkenyl, (C₃-C₆)Alkinyl,
   - R_{B}³: Halogen, (C₁-C₄)Alkyl, (C₁-C₄)Haloalkyl oder (C₁-C₄)Alkoxy und
   - m_{B}: 1 oder 2 bedeuten,
   - z.B.: solche worin
   - R_{B}¹=: Cyclopropyl, R_{B}² = Wasserstoff und (R_{B}³) = 2-OMe ist ("Cyprosulfamide", S4-1),
   - R_{B}¹=: Cyclopropyl, R_{B}² = Wasserstoff und (R_{B}³) = 5-Cl-2-OMe ist (S4-2),
   - R_{B}¹=: Ethyl, R_{B}² = Wasserstoff und (R_{B}³) = 2-OMe ist (S4-3),
   - R_{B}¹=: Isopropyl, R_{B}² = Wasserstoff und (R_{B}³) = 5-Cl-2-OMe ist (S4-4) und
   - R_{B}¹=: Isopropyl, R_{B}² = Wasserstoff und (R_{B}³) = 2-OMe ist (S4-5);
S4^{c}) Verbindungen aus der Klasse der Benzoylsulfamoylphenylharnstoffe der Formel (S4^{c}), wie sie in der EP-A-365484 beschrieben sind, 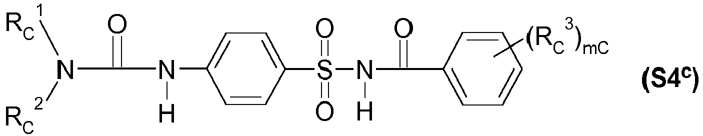 worin
   - R_{C}¹, R_{C}²: unabhängig voneinander Wasserstoff, (C₁-C₈)Alkyl, (C₃-C₈)Cycloalkyl, (C₃-C₆)Alkenyl, (C₃-C₆)Alkinyl,
   - R_{C}³: Halogen, (C₁-C₄)Alkyl, (C₁-C₄)Alkoxy, CF₃ und
   - m_{C}: 1 oder 2 bedeuten;
   beispielsweise
   1-[4-(N-2-Methoxybenzoylsulfamoyl)phenyl]-3-methylharnstoff,
   1-[4-(N-2-Methoxybenzoylsulfamoyl)phenyl]-3,3-dimethylharnstoff,
   1-[4-(N-4,5-Dimethylbenzoylsulfamoyl)phenyl]-3-methylharnstoff;
S4^{d}) Verbindungen vom Typ der N-Phenylsulfonylterephthalamide der Formel (S4^{d}) und deren Salze, die z.B. bekannt sind aus CN 101838227, 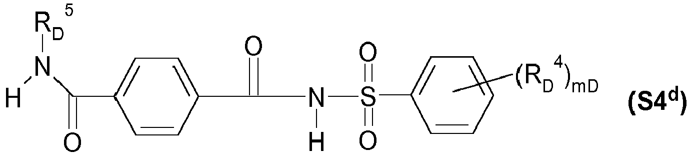 worin
   - R_{D}⁴: Halogen, (C₁-C₄)Alkyl, (C₁-C₄)Alkoxy, CF₃;
   - m_{D}: 1 oder 2;
   - R_{D}⁵: Wasserstoff, (C₁-C₆)Alkyl, (C₃-C₆)Cycloalkyl, (C₂-C₆)Alkenyl, (C₂-C₆)Alkinyl, (C₅-C₆)Cycloalkenyl bedeutet.
S5) Wirkstoffe aus der Klasse der Hydroxyaromaten und der aromatisch-aliphatischen Carbonsäurederivate (S5), z.B.
   3,4,5-Triacetoxybenzoesäureethylester, 3,5-Dimethoxy-4-hydroxybenzoesäure, 3,5-Dihydroxybenzoesäure, 4-Hydroxysalicylsäure, 4-Fluorsalicyclsäure, 2-Hydroxyzimtsäure, 2,4-Dichlorzimtsäure, wie sie in der WO-A-2004/084631, WO-A-2005/015994, WO-A-2005/016001 beschrieben sind.
S6) Wirkstoffe aus der Klasse der 1,2-Dihydrochinoxalin-2-one (S6), z.B. 1-Methyl-3-(2-thienyl)-1,2-dihydrochinoxalin-2-on, 1-Methyl-3-(2-thienyl)-1,2-dihydro-chinoxalin-2-thion, 1-(2-Aminoethyl)-3-(2-thienyl)-1,2-dihydro-chinoxalin-2-on-hydrochlorid, 1-(2-Methylsulfonylaminoethyl)-3-(2-thienyl)-1,2-dihydro-chinoxalin-2-on, wie sie in der WO-A-2005/112630 beschrieben sind.
S7) Verbindungen aus der Klasse der Diphenylmethoxyessigsäurederivate (S7), z.B. Diphenylmethoxyessigsäuremethylester (CAS-Reg.Nr. 41858-19-9) (S7-1), Diphenylmethoxyessigsäureethylester oder Diphenylmethoxyessigsäure wie sie in der WO-A-98/38856 beschrieben sind.
S8) Verbindungen der Formel (S8),wie sie in der WO-A-98/27049 beschrieben sind, 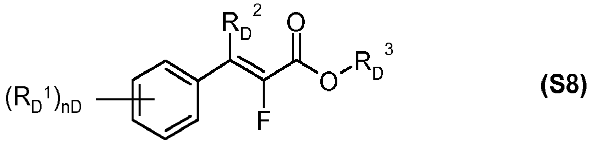 worin die Symbole und Indizes folgende Bedeutungen haben:
   - R_{D}¹: ist Halogen, (C₁-C₄)Alkyl, (C₁-C₄)Haloalkyl, (C₁-C₄)Alkoxy, (C₁-C₄)Haloalkoxy,
   - R_{D}²: ist Wasserstoff oder (C₁-C₄)Alkyl,
   - R_{D}³: ist Wasserstoff, (C₁-C₈)Alkyl, (C₂-C₄)Alkenyl, (C₂-C₄)Alkinyl, oder Aryl, wobei jeder der vorgenannten C-haltigen Reste unsubstituiert oder durch einen oder mehrere, vorzugsweise bis zu drei gleiche oder verschiedene Reste aus der Gruppe, bestehend aus Halogen und Alkoxy substituiert ist; oder deren Salze,
   - n_{D}: ist eine ganze Zahl von 0 bis 2.
S9) Wirkstoffe aus der Klasse der 3-(5-Tetrazolylcarbonyl)-2-chinolone (S9), z.B. 1,2-Dihydro-4-hydroxy-1-ethyl-3-(5-tetrazolylcarbonyl)-2-chinolon (CAS-Reg.Nr.: 219479-18-2), 1,2-Dihydro-4-hydroxy-1-methyl-3-(5-tetrazolyl-carbonyl)-2-chinolon (CAS-Reg.Nr. 95855-00-8), wie sie in der WO-A-1999/000020 beschrieben sind.
S10) Verbindungen der Formeln (S10^{a}) oder (S10^{b}), wie sie in der WO-A-2007/023719 und WO-A-2007/023764 beschrieben sind, 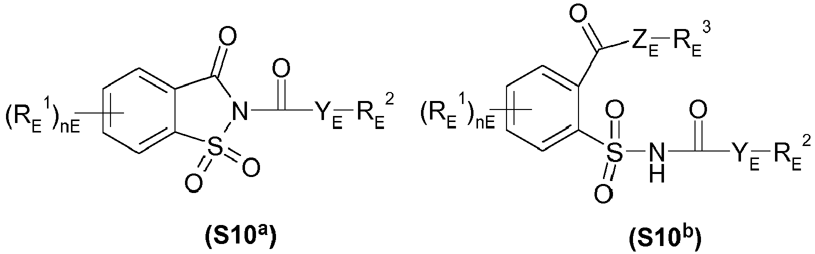 worin
   - R_{E}¹: Halogen, (C₁-C₄)Alkyl, Methoxy, Nitro, Cyano, CF₃, OCF₃
   - Y_{E}, Z_{E}: unabhängig voneinander O oder S,
   - n_{E}: eine ganze Zahl von 0 bis 4,
   - R_{E}²: (C₁-C₁₆)Alkyl, (C₂-C₆)Alkenyl, (C₃-C₆)Cycloalkyl, Aryl; Benzyl, Halogenbenzyl,
   - R_{E}³: Wasserstoff oder (C₁-C₆)Alkyl bedeuten.
S11) Wirkstoffe vom Typ der Oxyimino-Verbindungen (S11), die als Saatbeizmittel bekannt sind, wie z. B.
   "Oxabetrinil" ((Z)-1,3-Dioxolan-2-ylmethoxyimino(phenyl)acetonitril) (S11-1), das als Saatbeiz-Safener für Hirse gegen Schäden von Metolachlor bekannt ist,
   "Fluxofenim" (1-(4-Chlorphenyl)-2,2,2-trifluor-1-ethanon-O-(1,3-dioxolan-2-ylmethyl)-oxim) (S 11-2), das als Saatbeiz-Safener für Hirse gegen Schäden von Metolachlor bekannt ist, und "Cyometrinil" oder "CGA-43089" ((Z)-Cyanomethoxyimino(phenyl)acetonitril) (S11-3), das als Saatbeiz-Safener für Hirse gegen Schäden von Metolachlor bekannt ist.
S12) Wirkstoffe aus der Klasse der Isothiochromanone (S12), wie z.B. Methyl-[(3-oxo-1H-2-benzothiopyran-4(3H)-yliden)methoxy]acetat (CAS-Reg.Nr. 205121-04-6) (S12-1) und verwandte Verbindungen aus WO-A-1998/13361.
S13) Eine oder mehrere Verbindungen aus Gruppe (S13):
   "Naphthalic anhydrid" (1,8-Naphthalindicarbonsäureanhydrid) (S13-1), das als Saatbeiz-Safener für Mais gegen Schäden von Thiocarbamatherbiziden bekannt ist,
   "Fenclorim" (4,6-Dichlor-2-phenylpyrimidin) (S 13-2), das als Safener für Pretilachlor in gesätem Reis bekannt ist,
   "Flurazole" (Benzyl-2-chlor-4-trifluormethyl-1,3-thiazol-5-carboxylat) (S13-3), das als Saatbeiz-Safener für Hirse gegen Schäden von Alachlor und Metolachlor bekannt ist,
   "CL 304415" (CAS-Reg.Nr. 31541-57-8) (4-Carboxy-3,4-dihydro-2H-1-benzopyran-4-essigsäure) (S13-4) der Firma American Cyanamid, das als Safener für Mais gegen Schäden von Imidazolinonen bekannt ist,
   "MG 191" (CAS-Reg.Nr. 96420-72-3) (2-Dichlormethyl-2-methyl-1,3-dioxolan) (S13-5) der Firma Nitrokemia, das als Safener für Mais bekannt ist,
   "MG 838" (CAS-Reg.Nr. 133993-74-5) (2-propenyl 1-oxa-4-azaspiro[4.5]decan-4-carbodithioat) (S13-6) der Firma Nitrokemia
   "Disulfoton" (O,O-Diethyl S-2-ethylthioethyl phosphordithioat) (S13-7),
   "Dietholate" (O,O-Diethyl-O-phenylphosphorothioat) (S13-8),
   "Mephenate" (4-Chlorphenyl-methylcarbamat) (S13-9).
S14) Wirkstoffe, die neben einer herbiziden Wirkung gegen Schadpflanzen auch Safenerwirkung an Kulturpflanzen wie Reis aufweisen, wie z. B.
   "Dimepiperate" oder "MY-93" (S-1-Methyl-1-phenylethyl-piperidin-1-carbothioat), das als Safener für Reis gegen Schäden des Herbizids Molinate bekannt ist,
   "Daimuron" oder "SK 23" (1-(1-Methyl-1-phenylethyl)-3-p-tolyl-harnstoff), das als Safener für Reis gegen Schäden des Herbizids Imazosulfuron bekannt ist,
   "Cumyluron" = "JC-940" (3-(2-Chlorphenylmethyl)-1-(1-methyl-1-phenyl-ethyl)harnstoff, siehe JP-A-60087254), das als Safener für Reis gegen Schäden einiger Herbizide bekannt ist,
   "Methoxyphenon" oder "NK 049" (3,3'-Dimethyl-4-methoxy-benzophenon), das als Safener für Reis gegen Schäden einiger Herbizide bekannt ist,
   "CSB" (1-Brom-4-(chlormethylsulfonyl)benzol) von Kumiai, (CAS-Reg.Nr. 54091-06-4), das als Safener gegen Schäden einiger Herbizide in Reis bekannt ist.
S15) Verbindungen der Formel (S15) oder deren Tautomere, 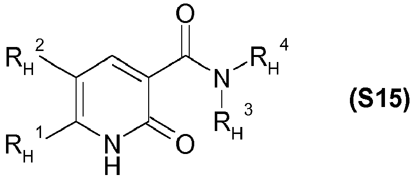 wie sie in der WO-A-2008/131861 und WO-A-2008/131860 beschrieben sind,
   worin
   - R_{H}¹: einen (C₁-C₆)Haloalkylrest bedeutet und
   - R_{H}²: Wasserstoff oder Halogen bedeutet und
   - R_{H}³, R_{H}⁴: unabhängig voneinander Wasserstoff, (C₁-C₁₆)Alkyl, (C₂-C₁₆)Alkenyl oder (C₂-C₁₆)Alkinyl, wobei jeder der letztgenannten 3 Reste unsubstituiert oder durch einen oder mehrere Reste aus der Gruppe Halogen, Hydroxy, Cyano, (C₁-C₄)Alkoxy, (C₁-C₄)Haloalkoxy, (C₁-C₄)Alkylthio, (C₁-C₄)Alkylamino, Di[(C₁-C₄)alkyl]-amino, [(C₁-C₄)Alkoxy]-carbonyl, [(C₁-C₄)Haloalkoxy]-carbonyl, (C₃-C₆)Cycloalkyl, das unsubstituiert oder substituiert ist, Phenyl, das unsubstituiert oder substituiert ist, und Heterocyclyl, das unsubstituiert oder substituiert ist, substituiert ist,
   oder (C₃-C₆)Cycloalkyl, (C₄-C₆)Cycloalkenyl, (C₃-C₆)Cycloalkyl, das an einer Seite des Rings mit einem 4 bis 6-gliedrigen gesättigten oder ungesättigten carbocyclischen Ring kondensiert ist, oder (C₄-C₆)Cycloalkenyl, das an einer Seite des Rings mit einem 4 bis 6-gliedrigen gesättigten oder ungesättigten carbocyclischen Ring kondensiert ist,
   wobei jeder der letztgenannten 4 Reste unsubstituiert oder durch einen oder mehrere Reste aus der Gruppe Halogen, Hydroxy, Cyano, (C₁-C₄)Alkyl, (C₁-C₄)Haloalkyl, (C₁-C₄)Alkoxy, (C₁-C₄)Haloalkoxy, (C₁-C₄)Alkylthio, (C₁-C₄)Alkylamino, Di[(C₁-C₄)alkyl]-amino, [(C₁-C₄)Alkoxy]-carbonyl, [(C₁-C₄)Haloalkoxy]-carbonyl, (C₃-C₆)Cycloalkyl, das unsubstituiert oder substituiert ist, Phenyl, das unsubstituiert oder substituiert ist, und Heterocyclyl, das unsubstituiert oder substituiert ist, substituiert ist,
   bedeutet oder
   - R_{H}³: (C₁-C₄)-Alkoxy, (C₂-C₄)Alkenyloxy, (C₂-C₆)Alkinyloxy oder (C₂-C₄)Haloalkoxy bedeutet und
   - R_{H}⁴: Wasserstoff oder (C₁-C₄)-Alkyl bedeutet oder
   - R_{H}³ und R_{H}⁴: zusammen mit dem direkt gebundenen N-Atom einen vier- bis achtgliedrigen heterocyclischen Ring, der neben dem N-Atom auch weitere Heteroringatome, vorzugsweise bis zu zwei weitere Heteroringatome aus der Gruppe N, O und S enthalten kann und der unsubstituiert oder durch einen oder mehrere Reste aus der Gruppe Halogen, Cyano, Nitro, (C₁-C₄)Alkyl, (C₁-C₄)Haloalkyl, (C₁-C₄)Alkoxy, (C₁-C₄)Haloalkoxy und (C₁-C₄)Alkylthio substituiert ist, bedeutet.
S16) Wirkstoffe, die vorrangig als Herbizide eingesetzt werden, jedoch auch Safenerwirkung auf Kulturpflanzen aufweisen, z. B.
   (2,4-Dichlorphenoxy)essigsäure (2,4-D),
   (4-Chlorphenoxy)essigsäure,
   (R,S)-2-(4-Chlor-o-tolyloxy)propionsäure (Mecoprop),
   4-(2,4-Dichlorphenoxy)buttersäure (2,4-DB),
   (4-Chlor-o-tolyloxy)essigsäure (MCPA),
   4-(4-Chlor-o-tolyloxy)buttersäure,
   4-(4-Chlorphenoxy)buttersäure,
   3,6-Dichlor-2-methoxybenzoesäure (Dicamba),
   1-(Ethoxycarbonyl)ethyl-3,6-dichlor-2-methoxybenzoat (Lactidichlor-ethyl).

Bevorzugte Safener im Sinne der vorliegenden Erfindungs sind Safener auf Basis der Ester von Cloquintocet (bevorzugt Mexyl-ester) und/oder Mefenpyr (bevorzugt als diethyl-ester), besonders bevorzugt Mefenpyr-Diethylester..

Als Verdicker f) kommen bevorzugt organische Verdicker in Frage, wobei diese natürliche oder. biotechnologisch modifizierte oder organisch synthetische Verdicker sein können.

Typische synthetische Verdicker sind Rheostrux® (Croda), Thixin®- oder Thixatrol®-Reihe (Elementis). Diese sind typischerweise auf Basis von Acrylaten. Typische organische Verdicker sind auf Basis von Xanthan oder Cellulose (wie etwa Hydroxyethyl oder Carboxymethylcellulose) oder einer Kombination davon. Bevorzugt werden natürliche modifzierte Verdicker auf Basis von Xanthan verwendet. Typische Vertreter sind beispielsweise Rhodopol® (Solvay) und Kelzan® (Kelco Corp.) sowie Satiaxane® (Cargill).

Weitere Zusatz- und Hilfsstoffe g) sind Netzmittel, pH-Wert-Einstellungsmittel, Entschäumer, Biozide, Desintegrationsmittel, Haftvermittler, Frostschutzmittel, Konservierungsmittel, Farbstoffe oder Dünger, sowie von Komponente b) verschiedene Tenside und von c) verschiedene Füllstoffe, bevorzugt werden Frostschutzmittel, Entschäumer und Biozide zugesetzt.

Geeignete Entschäumer sind oberflächenaktive Verbindungen auf Silikon- bzw. Silanbasis wie die Tegopren®-Produkte (Goldschmidt), die SE®-Produkte (Wacker), sowie die Bevaloid®- (Kemira), Rhodorsil®- (Solvay) und Silcolapse®-Produkte (Blustar Silicones) bevorzugt sind SE®- (Wacker), Rhodorsil®-und Silcolapse®-Produkte, besonders bevorzugt sind z.B. Produkte wie Silcolapse® 5020.

Geeignete Frostschutzmittel sind solche aus der Gruppe der Harnstoffe, Diole und Polyole, wie Ethylenglycol und Propylenglycol, Glycerin bevorzugt Propylenglycol oder Glycerin.

Geeignete Biozide sind z.B. Produkte wie Acticide® MBS (Biozid, Thor Chemie), CIT, MIT oder BIT wie etwa Proxel® GXL (BIT), Acticide® SPX (MIT, CIT).

Geeignete Haftvermittler können ausgewählt werden aus der Gruppe Polyvinylpyrrolidon (PVP), Polyvinylalkohol, Co-Polymer aus PVP und Dimethylaminoethylmethacrylat, butyliertes PVP, Co-Polymer aus Vinylchlorid und Vinylacetat, Na-Salz des Co-Polymers aus Propensultansäure und partiell hydrolysiertem Vinylacetat, Natriumcaseinat, Phenolharze, modifizierte CelluloseTypen wie beispielsweise Luviskol® (Polyvinylpyrrolidon), Mowiol® (Polyvinylalkohol), modifizierte Cellulose Bevorzugt sind Polyvinylpyrrolidon-Typen, besonders bevorzugt sind Typen von niedrigem Molekulargewicht wie Luviskol® K30.

Geeignete Desintegrationsmittel können ausgewählt werden aus der Gruppe der modifizierten Kohlenhydrate, wie mikrokristalline Cellulose und quervernetzten Polyvinylpyrrolidone, wie beispielsweise Avicel® PH 101 (mikrokristalline Cellulose), Agrimer® XLF (quervemetztes Polyvinylpyrrolidon), Disintex® 200 (quervemetztes Polyvinylpyrrolidon). Bevorzugt sind quervernetzte Polyvinylpyrrolidone, wie Agrimer® XLF.

Geeignete Antischaum-Mittel können ausgewählt werden aus der Gruppe der Ester der Phosphorsäure mit niederen Alkoholen, C6-C10 Alkohole, Silicontenside (Suspoemulsionen von hydrophobisierten Kieselsäurepartikeln in wässrigen Emulsionskonzentraten auf der Basis flüssiger Silicontenside), wie Polydimethylsiloxan, sowie deren Absorbate an festes Trägermaterial wie beispielsweise Rhodorsil® 432 (Silicontensid), Butylphosphat, iso-Butylphosphat, n-Octanol, Wacker ASP15 (Polydimethylsiloxan, an festem Träger absorbiert), Antischaum-Mittel®SE (Polydimethylsiloxan). Bevorzugt sind Suspoemulsionen von hydrophobisierten Kieselsäurepartikeln in wässrigen Emulsionskonzentraten auf der Basis flüssiger Silicontenside, wie Antischaum-Mittel® SE (Polydimethylsiloxan), und feste Antischaum-Mittel, wie Wacker ASP 15 (Polydimethylsiloxan).

Die Erfindung betrifft weiterhin ein herbizides Mittel, welches aus den erfindungsgemäßen SC's durch Verdünnen mit Flüssigkeiten, bevorzugt Wasser, hergestellt werden kann.

Es kann vorteilhaft sein, den so erhaltenen herbiziden Mitteln weitere Wirkstoffe, bevorzugt agrochemische Wirkstoffe (z.B. als Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche Mittel, bevorzugt herbizide, auf Basis der erfindungsgemäßen Formulierungen.

Eine besondere Ausführungsform der Erfindung betrifft die Verwendung der aus den erfindungsgemäßen SC's erhältlichen herbiziden Mittel zur Bekämpfung von unerwünschtem Pflanzenwuchs, im Folgenden als "herbizides Mittel" bezeichnet.

Die herbiziden Mittel weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfasst. Dabei können die herbiziden Mittel z.B. im Vorsaat-, Vorauflauf- oder Nachauftaufverfahren ausgebracht werden. Im einzelnen seien beispielhaft einige Vertreter der mono- und dikotylen Unkrautflora genannt, die durch die herbiziden Mittel kontrolliert werden können, ohne dass durch die Nennung eine Beschränkung auf bestimmte Arten erfolgen soll.

Auf der Seite der monokotylen Unkrautarten werden z.B. Apera spica venti, Avena spp., Alopecurus spp., Brachiaria spp., Digitaria spp., Lolium spp., Echinochloa spp.,Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfaßt. Bei dikotylen Unkrautarten erstreckt sich das Wirkungsspektrum auf Arten wie z.B. Abutilon spp., Amaranthus spp., Chenopodium spp., Chrysanthemum spp., Galium spp. wie Galium aparine, lpomoea spp., Kochia spp., Lamium spp., Matricaria spp., Pharbitis spp., Polygonum spp., Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z.B. Echinochloa, Sagittaria, Alisma, Eleocharis, Scirpus und Cyperus werden von den herbiziden Mitteln ebenfalls hervorragend bekämpft. Werden die herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Die herbiziden Mittel zeichnen sich durch eine schnell einsetzende und lang andauernde herbizide Wirkung aus. Die Regenfestigkeit der Wirkstoffe in den herbiziden Mitteln ist in der Regel günstig. Als besonderer Vorteil fällt ins Gewicht, dass die in den herbiziden Mittel verwendeten und wirksamen Dosierungen von herbiziden Verbindungen so gering eingestellt werden können, dass ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäße Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen herbiziden Mittel hinsichtlich der beschriebenen Eigenschaften deutlich übertroffen.

Obgleich die herbiziden Mittel eine ausgezeichnete herbizide Aktivitätgegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Reis oder Mais, nur unwesentlich oder gar nicht geschädigt. Die vorliegenden herbiziden Mittel eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die entsprechenden herbiziden Mittel je nach Kulturpflanze hervorragende Wachstumsregulatorische Eigenschaften auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich potentiell auch zur generellen Steuerung und Hemmung von unerwünschtem vegetativen Wachstum, ohne dabei die Pflanzen abzutöten. Eine Hemmung des vegetativen Wachstums spielt bei vielen mono-und dikotylen Kulturen eine große Rolle, da das Lagern hierdurch verringert oder völlig verhindert werden kann.

Aufgrund ihrer herbiziden und pflanzenwachstumsregulatorischen-Eigenschaften können die herbiziden Mittel -wie bereits erwähnt- auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der herbiziden Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Bevorzugt können die herbiziden Mittel in Nutzpflanzenkulturen eingesetzt werden, welche gegenüber den phytotoxischen Wirkungen der Herbizide resistent sind bzw. gentechnisch resistent gemacht worden sind.

Bei der Anwendung der herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, bevorzugt gute Kombinierbarkeit mit den weiteren herbiziden Wirkstoffen, gegenüber denen die transgene Kultur resistent ist, sowie Beeinflussung von Wuchs und Ertrag der transgenen Kulturpflanzen.

Gegenstand der vorliegenden Erfindung ist somit auch ein Verfahren zur Bekämpfung von unerwünschtem Pflanzenwuchs, vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, dass dadurch gekennzeichnet ist, dass man die erfindungsgemäßen herbiziden Mittel auf die Schadpflanzen, Pflanzenteile, Pflanzensamen oder die Fläche auf der die Pflanzen wachsen, z.B. die Anbaufläche. appliziert. Die Pflanzenkulturen können auch gentechnisch verändert oder durch Mutationsselektion erhalten sein und sind bevorzugt tolerant gegenüber Acetolactatsynthase (ALS)-Inhibitoren.

Mit den erfindungsgemäßen WGs sowie SCs kann bei gleicher Aufwandmenge eine bessere biologische Wirkung erzielt werden. Vorteilhafterweise zeigen die erfindungsgemäßen SC's eine ausgezeichnete Pflanzenverträglichkeit wie eine reduzierte Neigung phytotoxische Schäden zu verursachen.

Daneben haben die erfindungsgemäßen SC's als spezielle Wirkstoff-Kombinations-Formulierungen (synonym: Mischungs-Formulierungen, Co-Formulierungen) weitere Vorteile, wie z.B. ein geringerer Verpackungsaufwand als bei Verwendung der Einzelwirkstoffe, wodurch sich der Aufwand für Herstellung, Transport und Lagerung vereinfacht und die Zubereitung der in der Landwirtschaft eingesetzten Spritzbrühen durch die kleineren Mengen und die bereits eingestellten, wirksamen Mengenverhältnisse besser gehandhabt werden können, wie z.B. beim Mess- und Verrührvorgang.

Die erfindungsgemäßen SC's zeigen zusätzlich überraschenderweise hervorragende dispergierende und stabilisierende Eigenschaften nach dem weiteren Verdünnen mit Flüssigkeiten, bevorzugt Wasser.

Daneben ergeben die SC's Langzeit-lagerstabile und anwendungstechnisch einwandfreie Formulierungen.

Eine weitere bevorzugte Ausführungsform ist die Verwendung der erfindungsgemäßen SC's als Wachstumsregulator (Phytotonic). Bevorzugt werden diese Kombinationen eingesetzt um das "greening" der Pflanze zu verbessern

Pflanzenwachstumsregulatoren können verschiedene Wirkungen auf Pflanzen ausüben. Die Wirkung der Substanzen hängt im Wesentlichen vom Zeitpunkt der Applikation relativ zum Entwicklungsstadium der Pflanze und auch von den Wirkstoffmengen, die auf die Pflanzen oder ihre Umwelt ausgebracht werden und von der Ausbringungsart ab. In jedem Fall sollten Wachstumsregulatoren eine bestimmte gewünschte Wirkung auf die Kulturpflanzen ausüben.

Zu den wachstumsregulierenden Wirkungen zählen frühere Keimung, besseres Auflaufen, stärker entwickeltes Wurzelsystem und/oder verbessertes Wurzelwachstum, verstärkte Bestockungsfähigkeit, produktivere Bestockungstriebe, frühere Blüte, erhöhte Pflanzenhöhe und/oder Biomasse, Stängelverkürzung, Verbesserungen des Sproßwachstums, Anzahl Körner/Ähre, Anzahl Ähren/m², Anzahl Stolonen und/oder Anzahl Blüten, erhöhter Harvest Index, größere Blätter, weniger tote Basalblätter, verbesserte Phyllotaxie, frühere Reife/frühere Fruchtausbildung, homogene Reife, erhöhte Kornfüllungsdauer, bessere Fruchtausbildung, größere Frucht/Gemüsegröße, Sproßresistenz und verringerte Lagerung.

Erhöhter oder verbesserter Ertrag bezieht sich auf Gesamtbiomasse pro Hektar, Ertrag pro Hektar, Korn/Fruchtgewicht, Samengröße und/oder Hektolitergewicht sowie auf verbesserte Produktqualität, was Folgendes umfasst:
verbesserte Verarbeitbarkeit bezüglich Größenverteilung (Kern, Frucht usw.), homogene Reife, Kornfeuchtigkeit, besseres Mahlen, bessere Weinbereitung, besseres Brauen, erhöhter Saftertrag, erhöhte Erntbarkeit, erhöhte Verdaulichkeit, erhöhter Sedimentationswert, erhöhte Fallzahl, erhöhte Schotenstabilität, erhöhte Lagerstabilität, verbesserte Faserlänge/Stärke/Einheitlichkeit, Erhöhung der Milch- und/oder Fleischqualität von mit Silage gefütterten Tieren, Anpassung an Kochen und Braten;
weiterhin umfassend bessere Vermarktbarkeit in Bezug auf erhöhte Frucht-/Kornqualität, Größenverteilung (Kern, Frucht usw.), erhöhte Lagerfähigkeit/Haltbarkeit, Festigkeit/Weiche, Geschmack (Aroma, Textur, usw.), Klasse (Größe, Form, Anzahl Beeren usw.), Anzahl Beeren/Früchte pro Traube, Knackigkeit, Frische, Wachsbedeckung, Häufigkeit von physiologischen Störungen, Farbe usw.;
weiterhin umfassend Erhöhung der gewünschten Bestandteile wie z.B. Proteingehalt, Fettsäuren, Ölgehalt, Ölqualität, Aminosäurezusammensetzung, Zuckergehalt, Säuregehalt (pH-Wert), Zucker/Säure-Verhältnis (Brix), Polyphenole, Stärkegehalt, Nährwert, Glutengehalt/Index, Energiegehalt, Geschmack usw.;
und weiterhin umfassend eine Verringerung an unerwünschten Bestandteilen wie z.B. weniger Mycotoxine, weniger Aflatoxine, Geosmingehalt, Phenolaromen, Lacchase, Polyphenoloxidasen und Peroxidasen oder Nitratgehalt.

Pflanzenwachstumsregulierende Formulierungen können zum Beispiel dazu verwendet werden, um das vegetative Wachstum der Pflanzen zu verlangsamen. Solch eine Unterdrückung des Wachstums ist von wirtschaftlichem Interesse zum Beispiel bei Gräsern, da es dadurch möglich ist, die Häufigkeit des Rasenschnitts in Ziergärten, Parks und Sportanlagen, an Straßenrändern, auf Flughäfen oder in Fruchtkulturen zu verringern. Ebenfalls von Wichtigkeit ist die Hemmung des Wachstums von krautigen und holzigen Pflanzen an Straßenrändern und in der Nähe von Rohrleitungen oder oberirdischen Kabeln, oder ganz allgemein dort, wo kräftiger Pflanzenwuchs unerwünscht ist.

Ebenfalls von Wichtigkeit ist die Verwendung von Wachstumsregulatoren zur Hemmung des Längenwachstums von Getreide. Dies reduziert bzw. eliminiert vollständig das Risiko des Lagerns der Pflanzen vor der Ernte. Außerdem können Wachstumsregulatoren bei Getreide den Halm stärken, was ebenfalls dem Lagern entgegenwirkt. Der Einsatz von Wachstumsregulatoren zum Verkürzen und Stärken der Halme gestattet die Ausbringung von höheren Düngermengen, um den Ertrag zu erhöhen, ohne dass ein Lagerrisiko der Getreidekultur besteht.

Bei vielen Kulturpflanzen gestattet die Unterdrückung des vegetativen Wachstums eine größere Pflanzendichte, und es ist daher möglich, höhere Beträge in Bezug auf die Bodenoberfläche zu erzielen. Ein weiterer Vorteil der auf diese Art und Weise erhaltenen kleineren Pflanzen besteht darin, dass die Kultur leichter zu kultivieren und zu ernten ist.

Die Verringerung des vegetativen Pflanzenwachstums kann auch zu erhöhten oder verbesserten Erträgen führen, da die Nährstoffe und Assimilate von größerem Nutzen für Blüten- und Fruchtbildung als für die vegetativen Teile der Pflanzen sind.

Alternativ dazu können Wachstumsregulatoren auch dazu verwendet werden, um das vegetative Wachstum zu fördern. Dies ist dann von großem Nutzen, wenn die vegetativen Pflanzenteile geerntet werden. Die Förderung des vegetativen Wachstums kann jedoch auch das generative Wachstum insofern fördern, als mehr Assimilate gebildet werden, was zu mehr oder größeren Früchten führt.

Weiterhin lassen sich nutzbringende Wirkungen auf das Wachstum oder den Ertrag durch eine verbesserte Nährstoffverwertung, insbesondere Stickstoff (N)-Verwertung, Phosphor(P)-Verwertung, Wasserverwertung, verbesserte Transpirations-, Respirations- und/oder CO2-Assimilationsrate, bessere Knöllchenbildung, einen verbesserten Ca-Metabolismus usw. erzielen.

Ebenso können Wachstumsregulatoren dazu verwendet werden, um die Zusammensetzung der Pflanzen zu verändern, was wiederum zu einer Verbesserung der Qualität des Ernteguts führen kann. Unter dem Einfluss von Wachstumsregulatoren können parthenokarpe Früchte gebildet werden. Außerdem ist es möglich, das Geschlecht der Blüten zu beeinflussen. Es ist auch möglich, sterilen Pollen zu produzieren, was von großer Wichtigkeit in der Züchtung und Produktion von Hybridsaatgut ist.

Die Verwendung von Wachstumsregulatoren kann die Verzweigung der Pflanzen kontrollieren. Einerseits kann man durch Brechen der Apikaldominanz die Entwicklung von Nebentrieben fördern, was insbesondere beim Anbau von Zierpflanzen, auch in Kombination mit einer Wachstumshemmung, sehr erwünscht sein kann. Andererseits kann man jedoch auch das Wachstum der Nebentriebe hemmen. Diese Wirkung ist zum Beispiel beim Anbau von Tabak oder beim Anbau von Tomaten von besonderem Interesse.

Unter dem Einfluss von Wachstumsregulatoren kann die Menge an Blättern an der Pflanze derart kontrolliert werden, dass eine Entlaubung der Pflanzen zu einem bestimmten Zeitpunkt erfolgt. Solch eine Entlaubung spielt bei der mechanischen Ernte von Baumwolle eine wesentliche Rolle, ist jedoch auch bei der Ernteerleichterung in anderen Kulturen, zum Beispiel im Weinbau, von Interesse. Die Entlaubung der Pflanzen kann auch vorgenommen werden, um die Transpiration der Pflanzen zu erniedrigen, bevor sie umgesetzt werden.

Weiterhin können Wachstumsregulatoren die Pflanzenseneszenz modulieren, was zu einer verlängerten Dauer der grünen Blattfläche, einer längeren Kornfüllungsphase, einer verbesserten Ertragsqualität usw. führen kann.

Ebenso können Wachstumsregulatoren zum Regulieren des Fruchtfalls verwendet werden. Einerseits ist es möglich, vorzeitigen Fruchtfall zu verhindern. Andererseits ist es auch möglich, Fruchtfall, ja sogar den Blütenabwurf, zu fördern, um eine gewünschte Masse zu erzielen ("Ausdünnen"). Zusätzlich ist es möglich, Wachstumsregulatoren zum Erntezeitpunkt einzusetzen, um die Kraft, die erforderlich ist, um die Früchte abzulösen, zu reduzieren, um ein mechanisches Beernten zu gestatten oder um die Ernte von Hand zu erleichtern.

Wachstumsregulatoren können auch dazu verwendet werden, um eine schnellere oder auch verzögerte Abreife des Ernteguts vor oder nach der Ernte zu erzielen. Dies ist besonders vorteilhaft, als es eine optimale Einstellung auf die Erfordernisse des Markts gestattet. Weiterhin können Wachstumsregulatoren in manchen Fällen die Fruchtfärbung verbessern. Zusätzlich können Wachstumsregulatoren auch dazu verwendet werden, um die Abreife innerhalb eines bestimmten Zeitraums zu synchronisieren. Dies bildet die Voraussetzung für eine vollständige mechanische Beerntung oder Ernte von Hand in einem einzigen Arbeitsgang, zum Beispiel bei Tabak, Tomaten oder Kaffee.

Durch die Verwendung von Wachstumsregulatoren ist es zusätzlich möglich, die Samen- oder Knospenruhe der Pflanzen derart zu beeinflussen, dass Pflanzen wie Ananas oder Zierpflanzen in Gärtnereien zum Beispiel dann keimen, sprießen oder blühen, wenn sie normalerweise nicht dazu tendieren würden. Dort, wo ein Frostrisiko besteht, kann es wünschenswert sein, die Knospenbildung oder Keimung von Samen mit Hilfe von Wachstumsregulatoren zu verzögern, um Spätfrostschäden zu vermeiden.

Schließlich können Wachstumsregulatoren eine Resistenz der Pflanzen gegenüber Frost, Trockenheit oder hohen Salzgehalt des Bodens induzieren. Dies gestattet den Anbau von Pflanzen in Regionen, die sich normalerweise nicht zu diesem Zweck eignen.

Die erfindungsgemäßen Formulierungen üben auch eine starke Kräftigungswirkung auf Pflanzen aus. Demgemäß können sie zum Mobilisieren der Abwehrkräfte der Pflanze gegen Befall durch unerwünschte Mikroorganismen verwendet werden. Pflanzenkräftigende (resisistenzinduzierende) Substanzen sind im vorliegenden Zusammenhang Substanzen, die fähig sind, das Abwehrsystem von Pflanzen so zu stimulieren, dass bei den behandelten Pflanzen, wenn sie anschließend mit unerwünschten Mikroorganismen inokuliert werden, ein hohes Ausmaß an Resistenz gegen diese Mikroorganismen entsteht.

Weiterhin umfassen pflanzenphysiologische Wirkungen im Zusammenhang mit der vorliegenden Erfindung die Folgenden:
Toleranz von abiotischem Stress, einschließlich Toleranz gegen hohe oder niedrige Temperaturen, Trockenheitstoleranz und Erholung nach Trockenstress, Wassernutzung (die mit reduzierter Wasseraufnahme korreliert ist), Staunässe-toleranz, Ozonstress und UV-Toleranz, Toleranz gegen Chemikalien wie Schwermetalle, Salze, Pestizide usw.

Toleranz von biotischem Stress, einschließlich erhöhter Pilzresistenz und erhöhter Resistenz gegen Nematoden, Viren und Bakterien. Im Zusammenhang mit der vorliegenden Erfindung umfasst die Toleranz gegen biotischen Stress vorzugsweise erhöhte Pilzresistenz und erhöhte Resistenz gegen Nematoden.

Erhöhte Pflanzenwüchsigkeit, einschließlich Pflanzengesundheit/Pflanzenqualität und Triebkraft von Saatgut, reduzierten Umfallens, verbesserten Erscheinungsbilds, verbesserten Erholens nach Stressperioden, verbesserter Pigmentierung (z.B. Chlorophyllgehalt, Stay-Green-Wirkungen, usw.) und verbesserter Photosyntheseeffizienz.

Gegenstand der vorliegenden Erfindung ist demnach die Verwendung der erfindungsgemäßen SC's zur Steigerung der Widerstandsfähigkeit von Pflanzen gegenüber abiotischen Stressfaktoren, bevorzugt gegenüber Trockenstress, insbesondere zur Stärkung des Pflanzenwachstums und/oder zur Erhöhung des Pflanzenertrags.

Die weiter oben genannten verschiedenartigen Vorteile für Pflanzen lassen sich bekannterweise partiell zusammenfassen und mit allgemein gültigen Begriffen belegen. Soche Begriffe sind beispielsweise die nachfolgend aufgeführten Bezeichnungen: phytotonischer Effekt, Widerstandsfähigkeit gegenüber Stressfaktoren, weniger Pflanzenstress, Pflanzengesundheit, gesunde Pflanzen, Pflanzenfitness, ("Plant Fitness"), "Plant Wellness", "Plant Concept", "Vigor Effect", "Stress Shield", Schutzschild, "Crop Health", "Crop Health Properties", "Crop Health Products", "Crop Health Management", "Crop Health Therapy", "Plant Health", Plant Health Properties", Plant Health Products", "Plant Health Management", "Plant Health Therapy", Grünungseffekt ("Greening Effect" oder "Re-greening Effect"), "Freshness" oder andere Begriffe, die einem Fachmann durchaus bekannt sind.

Im nachfolgenden wird zusammenfassend für erfindungsgemäße SC's von erfindungsgemäßen Formulierungen gesprochen.

Die Erfindung wird durch die nachfolgenden Beispiele näher erläutert, ohne sie dadurch einzuschränken.

### Beispiele

### Verwendete Substanzen und Abkürzungen:

Die in den nachfolgenden Beispielen verwendeten Begriffe haben folgende Bedeutung:
- Mefenpyr-diethyl: Diethyl (*RS*)-1-(2,4-dichlorophenyl)-5-methyl-2-pyrazoline-3,5-dicarboxylate, (Bayer CropScience AG), Schmelzbereich 50-55°C
- Flufenacet: 4'-Fluoro-N-isopropyl-2-(5-trifluoromethyl-1,3,4-thiadiazol-2-yloxy)acetanilide (Bayer CropScience AG)
- Diflufenican: 2',4'-Difluoro-2-(α,α,α-trifluoro-m-tolyloxy)nicotinanilide (Bayer CropScience AG)
- DCPMI: 2-[(2,4-Dichlorphenyl)-methyl]-4,4'-dimethyl-3-isoxazolidinone (CAS Nummer 81777-95-9 bzw. IPUAC 2-(2,4-dichlorobenzyl)-4,4-dimethyl-1,2-oxazolidin-3-one, im Folgenden abgekürzt DCPMI)
- Morwet® D-425: Naphthalinsulfonsäure-formaldehyd-kondensat Natriumsalz (Akzo Nobel)
- Pluronic® PE 10500: Propylenoxid-Ethylenoxid-(PO-EO)-Blockpolymer (BASF)
- Citronensäure: mehrbasige organische Säure
- Rhodopol® G: Xanthan Derivat (Solvay)
- Silcolapse® 426R, 411: Silikon-Entschäumer (Solvay)
- Sipernat 50S: Hochdisperse Kieselsäure, Evonik, BET Oberfläche nach ISO 9277: 400-600
m^2/g
- Glycerin: Frostschutzmittel
- Proxel® GXL: Konservierungsmittel (Biozid, Proxel)

### Herstellungsbeispiel

### Herstellung eines Suspensionskonzentrats (SC):

Es wird zunächst Wasser bei Raumtemperatur vorgelegt. Unter Rühren werden anschließend die Komponenten a), b), c), d) und g) sowie e) zugegeben. Im Falle von e) = Mefenpyr-diethyl wird dieses warm bei 65°C zugegeben und es wird 2 bis 24 h gerührt, bis sich Kristalle bilden. Anschließend erfolgt eine Nassvermahlung beispielsweise mittels einer Perlmühle. Abschließend wird der organische Verdicker (Komponente f) zugegeben.

**Tabelle 1: Hergestellte Formulierungen (Angaben erfolgen in Gewichtsprozent, Gew.-%)**

| **Komponente** | | **Beispiel** | | | | |
|---|---|---|---|---|---|---|
| | | **1** | **2** | **3** | **4** | **5** |
| | | **(Vergleich)** | **(Vergleich)** | **(Erfindungs gemäß**) | **(Erfindungs gemäß)** | **(Erfindungs gemäß)** |
| e | Mefenpyr-diethyl | | | | | 4,5 |
| a | DCPMI | 40 | 20 | 20 | 20 | 9 |
| **d** | Diflufenican | | | | | 4,5 |
| **d** | Flufenacet | | | | | 9 |
| **b1** | Morwet® D-425 | 1,0 | 1,0 | 1,0 | 1,0 | 1,0 |
| **b2** | Pluronic®PE 10500 | 5 | 5 | 5 | 5 | 5 |
| **g** | Citronensäure | 0,1 | 0,1 | 0,1 | 0,1 | 0,1 |
| **c** | Sipernat® 50S | 1 | 1 | 8 | 5 | 3 |
| **f** | Rhodopol® 23 | 0,2 | 0,2 | 0,1 | 0,1 | 0,1 |
| **g** | Silcolapse® 411 | 0,5 | 0,5 | 0,5 | 0,5 | 0,5 |
| **g** | Glycerin | 5 | 5 | 5 | 5 | 5 |
| **g** | Proxel® GXL | 0,18 | 0,18 | 0,18 | 0,18 | 0,18 |
| **Wasser** | | ad 100 | ad 100 | ad 100 | ad 100 | ad 100 |
| **Verhältnis DCPMI:Sipernat** | | 40 | 20 | 2,5 | 4 | 3 |
| Gesamt: | | 100 | 100 | 100 | 100 | 100 |

Vergleichsbeispiel 3 wurde analog Beispiel 5 aus PCT/EP2017/069701als Kapselsuspension hergestellt.

### Bestimmung der relativen Flüchtigkeit und Cuticle Penetration des Wirkstoffes

Es wird eine Spritzbrühe (0,5 g Wirkstoff/L) auf je drei Teflonmebranen in einer nach oben offenen Glasbox in einem Laborabzug unter konstantem Luftstrom von 1,6 m/s bei 22°C und 60% relativer Luftfeuchtigkeit gegeben. Der Rückstand auf den Teflonmembranen wird nach Trocknung nach 0 und 24 h per HPLC bestimmt. Die Flüchtigkeit wird bezogen auf den 0 h Wert. Die Bioverfügbarkeit wird anhand einer Apfelkutikelpenetration bestimmt. Es wird eine Spritzbrühe (0,5 g Wirkstoff/L) auf je drei Apfelkutikel gegeben. Es wird die Menge an Wirkstoff in den Kutikel gemessen; nach Trocknung nach 0 und 24 h per HPLC bestimmt.

100% relative Flüchtigkeit bedeutet, dass kein Wirkstoff über die Flüchtigkeit verloren gegangen ist. 100% Cuticle Penetration bedeutet, dass der Wirkstoff vollständig in die Pflanze penetriert ist. Wünschenswert ist eine hohe Penetration (= biologische Verfügbarkeit des Wirkstoffes in der Pflanze) sowie eine niedrige Flüchtigkeit. Idealerweise sind daher beide Werte bei 100%. Allerdings ist keine 100% Reduktion der Flüchtigkeit notwendig, sofern der Wirkstoff schnell genug in die Pflanze penetriert. Je höher die Penetration in die Pflanze, umso weniger Wirkstoff steht allgemein zur Verflüchtigung zur Verfügung.

**Tabelle 2: Bestimmung der Flüchtigkeit und Cuticle Penetration**

| **Beispiel** | **relative Flüchtigkeit in % nach 24 h** | **Cuticle Penetration % nach 24 h** |
|---|---|---|
| Vergleich 1 | 5 | 40 |
| Vergleich 2 | 7 | 38 |
| Vergleich 3 (Beispiel 5 aus PCT/EP2017/069701) | 100 | 10 |
| Erfindungsgemäß 3 | 65 | 85 |
| Erfindungsgemäß 4 | 35 | 70 |
| Erfindungsgemäß 5 | 50 | 70 |

Vergleichsbeispiel 1 zeigt, dass ein zu geringes Verhältnis an Wirkstoff zu Sipernat nicht ausreicht, um die Flüchtigkeit zu reduzieren. Vergleichsbeispiel 2 zeigt, dass Kapseln zwar in der Lage sind, die Flüchtigkeit um 100% zu reduzieren, allerdings ist der Wirkstoff kaum bioverfügbar (10% Cuticle Penetration).

Die erfindungsgemäßen Beispiele zeigen nicht nur eine Reduzierung der Flüchtigkeit (35-65%) sondern zeigen darüberhinaus auch eine Zunahme der Cuticle Penetration. Somit ist der Wirkstoff zeitgleich weniger flüchtig und höher Bioverfügbar.

### Gewächshaus

Um die Ergebnisse aus der Cuticle Penetration und Flüchigkeit aus dem Labor zu bestägigen, wurden Gewächshaus Versuche gemacht. Ziel war es nicht nur die Ergebnisse unter realen Bedingungen zu überprüfen, sondern auch zusätzlich die Effizienz (Unkrautbekämpfung am Gras ALOMY = Alopecurus myosuroides = Ackerfuchsschwanz) sowie die Phytoxizität (Schäden an der Nutzpflanze, Winterweizen) zu differnzieren. In einem Gewächshaus wurde in einem 4*4*m^3 mit PE Folie geschützten Bereich eine 1% Spritzbrühe in Wasser auf Winterweizen appliziert. In 1 m Entfernung des Weizens wurden Stellaria Media Pflanzen gestellt. Der jeweilige Boden war mit typischen Unkräutern versehen. Gemessen wurden phytotoxische Schäden an Winterweizen sowie der Bekämpfungsgrad am Umkraut. Die Flüchtigkeit wurde an Schäden an Stellaria Media (STEME) bewertet.

| Beispiel | Schäden an STEME | Phytotoxizität | Effizienz an ALOMY |
|---|---|---|---|
| Vergleich 1 (SC) | 60 | 18 | 55 |
| Vergleich 3 (CS) (Beispiel 5 aus PCT/EP2017/069701) | 5 | 0 | 20 |
| Beispiel 3 (erfindungsgemäß) | 8 | 0 | 64 |
| Beispiel 4 (erfindungsgemäß) | 30 | 8 | 93 |

Die erfindungsgemäßen Formulierungen mit den herbiziden Wirkstoffen zeigen eine verbesserte Reduzierung der Schäden an Nachbarkulturen bei hhöherer Wirkung und reduzierter Phytotoxizität.

## Patentansprüche

1. Wäßriges Suspensionskonzentrat enthaltend
a) 2-[(2,4-dichlorphenyl)-methyl-4,4'-dimethyl]-3-isoxazolidinone,
b) mindestens ein Dispergiermittel,
c) Trägermaterial,
d) optional mindestens einen von a) verschiedenen agrochemischen Wirkstoff,
e) optional mindestens einen Safener,
f) optional mindestens einen Verdicker, und
g) optional weitere Zusatz und Hilfsstoffe.

2. Suspensionskonzentrat nach Anspruch 1, **dadurch gekennzeichnet, daß** der Anteil der Komponente
a) 0,5 bis 35 Gew.-%
b) 1,0 bis 15 Gew.-%,
c) 0,1 bis 10 Gew.-%
d) 0%
e) 1-15 Gew.-%,
f) 0,01 bis 1,00 Gew.-%, und
g) 0 bis 20 Gew.-% beträgt,
wobei Wasser auf 100 Gew.% hinzuaddiert wird.

3. Suspensionskonzentrat nach Anspruch 1, **dadurch gekennzeichnet, daß** der Anteil der Komponente
a) 5 bis 30 Gew.-%
b) 2,0 bis 10 Gew.-%,
c) 0,3 bis 8,0 Gew.-%
d) optional mindestens einen von a) verschiedenen agrochemischen Wirkstoff,
e) 2,0 bis 12,0 Gew.-%,
f) 0,01 bis 0,60 Gew.-%, und
g) 3,0 bis 10,0 Gew.-% beträgt,
wobei Wasser auf 100 Gew.% hinzuaddiert wird.

4. Suspensionskonzentrat nach Anspruch 1, **dadurch gekennzeichnet, daß** der Anteil der Komponente
a) 10 bis 30 Gew.-%
b) 2,50 bis 8,0 Gew.-%,
c) 1,0 bis 7,0 Gew.-%
d) optional mindestens einen von a) verschiedenen agrochemischen Wirkstoff,
e) 3,0 bis 8,0 Gew.-%,
f) 0,04 bis 0,50 Gew.-%, und
g) 5,0 bis 10,0 Gew.-% beträgt,
wobei Wasser auf 100 Gew.% hinzuaddiert wird.

5. Suspensionskonzentrat nach Anspruch 1, **dadurch gekennzeichnet, daß** der Anteil der Komponente
a) 15 bis 25 Gew.-%
b) 2,5,0 bis 8,0 Gew.-%,
c) 1,0 bis 7,0 Gew.-%
d) optional mindestens einen von a) verschiedenen agrochemischen Wirkstoff,
e) 3,0 bis 8,0 Gew.-%,
f) 0,05 bis 0,30 Gew.-%, und
g) 5,0 bis 10,0 Gew.-% beträgt,
wobei Wasser auf 100 Gew.% hinzuaddiert wird.

6. Suspensionskonzentrat nach einem der Ansprüche 1-4, **dadurch gekennzeichnet, daß** ein weiterer Wirkstoffe d) enthalten ist, wobei beträgt der Gesamtanteil der Komponenten a) und d) 0,5 bis 35 Gew.-%, bevorzugt 5 bis 30 Gew.-%, besonders bevorzugt 10 bis 30 Gew.-% und ganz besonders bevorzugt 15 bis 25 Gew.-%, wobei der Anteil der Komponente a) wird durch die Komponente d) verringert.

7. Suspensionskonzentrat nach einem der Ansprüche 1-5, **dadurch gekennzeichnet, daß** b) eine Mischung aus b1) und b2, wobei der Anteil des anionischen Dispergierhilfsmittel b1) in den erfindungsgemäßen Suspensionskonzentraten 0,1 bis 10 Gew.-%, bevorzugt 0,2 bis 7 Gew.-% und ganz besonders bevorzugt 0,3 bis 4 Gew.-%, beträgt, und der Anteil des nicht-ionischen Dispergierhilfsmittel b2) in den erfindungsgemäßen Suspensionskonzentraten 1 bis 15 Gew.-%, bevorzugt 2 bis 10 Gew.-% und ganz besonders bevorzugt 2,5 bis 8 Gew.-% beträgt, wobei der Gesamtanteil in der Summe von b1) und b2) nicht überschritten wird.

8. Suspensionskonzentrat nach Anspruch 6, **dadurch gekennzeichnet, daß** der Anteil an b1) 0,3 bis 1,5 Gew.-%, und der Anteil an b2) 2,5 bis 7,5 Gew.-%.

9. Suspensionskonzentrat nach einem der vorhergehenden Ansprüche, **dadurch gekennzeichnet, daß** das Verhältnis von a) zu c) von 1 bis 10, weiter bevorzugt von 2 bis 8, besonders bevorzugt 3 - 6, und am meisten bevorzugt von 4 ist.

10. Suspensionskonzentrat nach einem der vorhergehenden Ansprüche, **dadurch gekennzeichnet, daß** als weitere Wirkstoffe d) Diflufenican und/oder Flufenacet enthalten sind.

11. Suspensionskonzentrat nach einem der vorhergehenden Ansprüche, **dadurch gekennzeichnet, daß** Komponente
b1) ein 1,2 mit Di-Butyl- oder Di-Isobutyl-substituiertes Naphthalinsulfonat,
b2) ein nicht-ionischer Dispergator vom Polyvinylpyrrolidon-Typ oder ein Block-Copolymer auf Basis von Ethylen- und Propylenoxid,
c) eine synthetische Fällungskieselsäure oder pyrogene Kieselsäure,
d) optional Flufenacet und/oder Diflufenican,
e) Mefenpyr-Diethylester, und
f) ein Verdicker auf Xanthan-Basis ist.

12. Verwendung der Suspensionskonzentrate Nach einem der vorhergehenden Ansprüche als Herbizid im Getreide und Raps und hierbei im Vorauflauf sowie im Nachauflauf.

13. Verfahren zur Bekämpfung von unerwünschten Pflanzen in Pflanzenkulturen, **dadurch gekennzeichnet, dass** die Suspensionskonzentrate nach einem der Ansprüche 1 bis 10 auf die Pflanzen, oder die Fläche, auf der die Pflanzen wachsen ausgebracht werden.

14. Verwendung der Suspensionskonzentrate nach einem der Ansprüche 1 bis 10 zur Bekämpfung von Schadpflanzen in transgenen Kulturpflanzen.

15. Verwendung der Suspensionskonzentrate nach einem der Ansprüche 1 bis 10 zur Behandlung von Pflanzen, bei denen das Saatgut mit Safener behandelt wurde.
